# EUROPEAN PATENT SPECIFICATION

(11) **EP 3 282 622 B1**
(45) Date of publication and mention of the grant of the patent: **06.04.2022**
(21) Application number: 15888354.6
(22) Date of filing: 10.11.2015
(51) Int. Cl.: H04L 5/00, H04W 4/70, H04W 72/04, H04W 72/12, H04W 88/08, H04W 72/00

(54) **METHOD FOR REALIZING CHANNEL TRANSMISSION AND BASE STATION**
VERFAHREN ZUR DURCHFÜHRUNG EINER KANALÜBERTRAGUNG UND BASISSTATION
PROCÉDÉ POU RÉALISER UNE TRANSMISSION DE CANAL ET STATION DE BASE

(30) Priority: 08.04.2015 CN 201510163568
(43) Date of publication of application: 14.02.2018
(73) Proprietor: ZTE Corporation, Shenzhen, Guangdong 518057 (CN)
(72) Inventor: SHI, Jing, Shenzhen Guangdong 518057 (CN); XIA, Shuqiang, Shenzhen Guangdong 518057 (CN); DAI, Bo, Shenzhen Guangdong 518057 (CN); CHEN, Xianming, Shenzhen Guangdong 518057 (CN); ZHANG, Wen, Shenzhen Guangdong 518057 (CN); LIU, Kun, Shenzhen Guangdong 518057 (CN); FANG, Huiying, Shenzhen Guangdong 518057 (CN)
(74) Representative: Novagraaf Technologies
(86) International application number: PCT/CN2015/094229
(87) International publication number: WO 2016/161804

(56) References cited:
- EP-A1- 2 680 654
- WO-A1-2014/175638
- WO-A1-2014/204285
- CN-A- 102 624 507
- CN-A- 103 780 334
- CN-A- 104 348 579
- KR-A- 20140 134 209
- US-A1- 2014 198 733
- ZTE: "Further Considerations on Physical downlink control channel for MTC enhancement", 3GPP DRAFT; R1-150142-FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933356, Retrieved from the Internet: URL:http://www.3gpp.org/ftp/Meetings_3GPP_ SYNC/RAN1/Docs/ [retrieved on 2015-02-08]
- ZTE: "Discussion on Physical data channels and associated physical control channels for MTC enhancement", 3GPP DRAFT; R1-143808, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20141006 - 20141010 5 October 2014 (2014-10-05), XP050875127, Retrieved from the Internet: URL:http://www.3gpp.org/ftp/Meetings_3GPP_ SYNC/RAN1/Docs/ [retrieved on 2014-10-05]
- ZTE: "Further considerations on SIB and Paging for MTC enhancement", 3GPP DRAFT; R1-150145-FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20150209 - 20150213 8 February 2015 (2015-02-08), XP050933359, Retrieved from the Internet: URL:http://www.3gpp.org/ftp/Meetings_3GPP_ SYNC/RAN1/Docs/ [retrieved on 2015-02-08]
- None

## Description

### Technical Field

The disclosure relates to, but is not limited to, the field of wireless communications, in particular to a method for realizing channel transmission, and a base station.

### Background

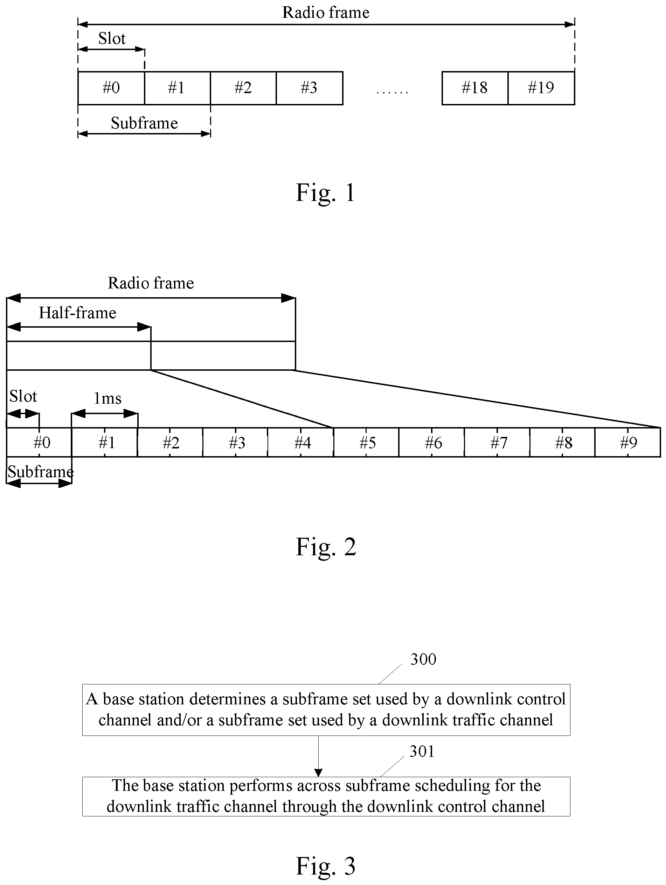

In a Long-Term Evolution (LTE) or LTE-Advance (LTE-A) system, control channel transmission may be performed based on dynamic scheduling of each subframe, that is, subframes may respectively transmit different control channels. Fig. 1 is a structure diagram of a frame adopting a Frequency Division Duplexing (FDD) mode to perform control channel transmission. As shown in Fig. 1, one radio frame of 10ms may be composed of 20 slots numbered from 0 to 19, each of which has a length of 0.5ms. Slots 2i and 2i+1 may form one subframe i whose length is 1ms, where i is 0 or a natural number. Fig. 2 is a structure diagram of a frame adopting a Time Division Duplexing (TDD) mode to perform control channel transmission. As shown in Fig. 2, one radio frame of 10ms may be composed of two half frames, each of which has a length of 5ms. One half frame may include five subframes, each of which has a length of 1ms. A subframe i may be defined to be composed of two slots 2i and 2i+1, each of which has a length of 0.5ms.

In the LTE/LTE-A system, control channels may include a Physical Downlink Control Channel (PDCCH) and an enhanced PDCCH (ePDCCH). The PDCCH is used for carrying Downlink Control Information (DCI), including uplink scheduling information, downlink scheduling information and uplink power control information.

Generally, a Machine-Type Communication (MTC) User Equipment (UE), also called a Machine to Machine (M2M) UE may acquire the DCI by demodulating, in each subframe, the PDCCH or the ePDCCH, so as to acquire indication information about demodulating a Physical Downlink Share Channel (PDSCH) and scheduling a Physical Uplink Share Channel (PUSCH). ACK/NACK feedback information of downlink transmission data may be carried on a Physical Uplink Control Channel (PUCCH).

The MTC UE currently is a main application form of Internet of Things. In recent years, because the spectral efficiency of the LTE or LTE-A system is high, more and more mobile operators may select the LTE or LTE-A as the development direction of a broadband wireless communication system, and a variety of MTC data services based on the LTE or LTE-A system will be more attractive. However, only if the cost of the MTC UE based on the LTE system is lower than that based on the Global System for Mobile Communications (GSM), can an M2M service be transferred from the GSM to the LTE system. How to reduce the cost of the MTC UE in the LTE system becomes a primary consideration of transferring the M2M service.

The cost of the MTC UE comes mainly from two parts, namely baseband processing and radio frequency. Reducing an uplink and/or downlink transmission bandwidth (including a baseband bandwidth and a radio frequency bandwidth) of the MTC UE may be a very effective manner of reducing the cost of the MTC UE. For example, when a system bandwidth is 20MHz, the uplink and/or downlink transmission bandwidth of the MTC UE may be set to only a narrow band bandwidth of 1.4MHz. Because the MTC UE still works in the system bandwidth of the LTE system, each subframe may only receive data of the narrow band bandwidth of 1.4MHz. When the narrow band bandwidth used for receiving data by the MTC UE is less than the system bandwidth, if the PDCCH cannot work, it is possible to use the ePDCCH to receive data. When the MTC UE works under the narrow band bandwidth, a part of the MTC UE under limited coverage may need to perform coverage enhancement based on a low cost. A basic method of coverage enhancement is repetition (also referred to as repeat transmission). At the present, the LTE system supports the MTC UE with low cost and the MTC UE performing coverage enhancement to use across subframe scheduling. However, in the LTE system, a Multicast Broadcast Single Frequency Network (MBSFN) transmitting a multicast/broadcast service may occupy the entire bandwidth of the system, but the MTC UE with low cost and the MTC UE performing coverage enhancement may not confirm this case of the MBSFN, so a timing relationship between a downlink control channel and a downlink traffic channel may be affected. Especially in a scenario of coverage enhancement, the MBSFN subframe transmitting the multicast/broadcast service may affect the repetition of different PDCCHs, therefore affecting the working quality of the system.

To sum up, for both the MTC UE in a narrow band system and the MTC UE in a coverage enhancement system, the method for downlink channel transmission cannot ensure the timing relationship between the downlink control channel and the downlink traffic channel, therefore affecting the normal communication of the MTC UE and the working quality of the system.

ZTE: "Further considerations on physical downlink control channel for MTC enhancement", 3GPP DRAFT, R1-150142-FINAL; US 2014/198733, EP 2680654, WO 2014/204285, WO 2014/175638, ZTE: "Discussion on physical data channels and associated physical control channels for MTC enhancement", 3GPP DRAFT, R1-143808; and ZTE: "Further considerations on SIB and paging for MTC enhancement", 3GPP DRAFT, R1-150145-FINAL; provide respective technical solutions; however, the above mentioned problem still remains unsolved.

### Summary

The following is an overview of the subject matter elaborated in this application. The overview is not intended to limit the scope of protection of the claims.

Some exemplary embodiments of the disclosure provide a method and device for realizing channel transmission, which may solve a problem about how to ensure a timing relationship between a downlink control channel and a downlink traffic channel, and how to ensure that MTC UE works normally. The method and device for realizing channel transmission may improve the working quality of a system.

A first embodiment of the invention is the method by a base station as defined in independent claim 1.

A second embodiment of the invention is an apparatus for a base station, as defined in independent claim 10 and corresponding to the method of claim 1. A third embodiment of the invention is an apparatus for a terminal as defined in independent claim 14 and inter-related to the apparatus of claim 10.

Dependent claims 2-9; 11-13 define preferred embodiments of the respective independent claims.

The invention is solely defined by the appended claims 1-14.

Compared with a related technology, in the solution of some embodiments of the disclosure, a base station may determine a subframe set used by a downlink control channel and/or a subframe set used by a downlink traffic channel; and the base station may perform across subframe scheduling for the downlink traffic channel through the downlink control channel. According to the method of some embodiments of the disclosure, after determining the subframe set used by the downlink control channel and/or the subframe set used by the downlink traffic channel, the base station may perform across subframe scheduling for the downlink traffic channel through the downlink control channel. By virtue of the solution, a timing relationship of channel transmission is prevented, in a narrow band system and a coverage enhancement system, from being affected due to the fact that the MBSFN subframe transmitting the multicast/broadcast service may occupy the entire bandwidth of the system, and the timing relationship between the base station and the terminal may be guaranteed. In this way, normal communication of an MTC UE may be ensured, and the working quality of the system may be improved.

Other aspects may be understood after the accompanying drawings and detailed descriptions are read and understood.

### Brief Description of the Drawings

Fig. 1 is a structure diagram of a frame adopting an FDD mode to perform control channel transmission;
Fig. 2 is a structure diagram of a frame adopting a TDD mode to perform control channel transmission;
Fig. 3 is a flowchart of a method for realizing channel transmission according to an embodiment of the disclosure;
Fig. 4 is a schematic diagram of a method for a downlink control channel to schedule a downlink traffic channel across subframes according to an embodiment of the disclosure;
Fig. 5 is a structure diagram of a base station for realizing channel transmission according to an embodiment of the disclosure;
Fig. 6 is a flowchart of another method for realizing channel transmission according to an embodiment of the disclosure;
Fig. 7 is a structure diagram of a base station for realizing channel transmission according to an embodiment of the disclosure; and
Fig. 8 is a schematic diagram of a frequency hopping granularity of the number of repetitions corresponding to a lowest repetition level of repetition in a coverage enhancement mode according to a first application example of the disclosure.

### Detailed Description of the Embodiments

The disclosure is elaborated below with reference to the accompanying drawings and embodiments. Note that, the embodiments of the disclosure and the characteristics in the embodiments may be combined under the condition of no conflicts.

Fig. 3 is a flowchart of a method for realizing channel transmission according to an embodiment of the disclosure. As shown in Fig. 3, the method may include the following acts.

At act S300, a base station may determine a subframe set used by a downlink control channel and/or a subframe set used by a downlink traffic channel.

In this act, the base station may determine the subframe set used by the downlink control channel in a following manner. The base station may determine the subframe set used by the downlink control channel according to a predefined mode or high-layer signaling.

The high-layer signaling may include SIB and RRC.

When the base station determines the subframe set used by the downlink control channel according to the predefined mode,
the subframe set used by the downlink control channel may include: a non-MBSFN subframe set which is determined by the base station according to the predefined mode.

When the base station determines the subframe set used by the downlink control channel according to the high-layer signaling,
the subframe set used by the downlink control channel may include: a subframe set including MBSFN subframes which is determined according to the high-layer signaling.

In an exemplary embodiment, when the subframe set used by the downlink control channel is the non-MBSFN subframe set, the non-MBSFN subframe set may include a set of all non-MBSFN subframes.

Furthermore, the base station may determine the subframe set used by the downlink traffic channel in a following manner.

The base station may indicate through an MTC system message, or may dynamically indicate through physical layer signaling, or may determine according to a predefined mode, or may determine through high-layer signaling configuration the subframe set used by the downlink traffic channel.

When the base station indicates the subframe set used by the downlink traffic channel through the MTC system message, the subframe set used by the downlink traffic channel may be indicated in the following manner. The base station may indicate an MBSFN subframe set and a set of available unicast subframes in MBSFN subframes through the MTC system message; or, the base station may indicate the MBSFN subframe set through the MTC system message, and may indicate that the downlink traffic channel uses only non-MBSFN subframes.

When the base station dynamically indicates the subframe set used by the downlink traffic channel through the physical layer signaling, the subframe set used by the downlink traffic channel may be indicated in the following manner. The base station may dynamically indicate an across subframe scheduling interval k through the physical layer signaling, so as to determine one or more subframes used by the downlink traffic channel; or,
the base station may indicate, through the physical layer signaling, that an subframe scheduled by across subframe scheduling is available, or may indicate, through the physical layer signaling, a subframe that the across subframe scheduling needs to skip.

When the base station determines according to a predefined mode or determines through high-layer signaling configuration the subframe set used by the downlink traffic channel, the subframe set used by the downlink traffic channel may be indicated in the following manner. The base station may determine according to a predefined mode or determine through high-layer signaling configuration the subframe set used by the downlink traffic channel.

At act S301, the base station may perform across subframe scheduling for the downlink traffic channel through the downlink control channel.

Note that, across subframe scheduling may refer to a conventional technical means adopted by those skilled in the art.

When the downlink control channel bears an uplink scheduling grant message, the method of the disclosure may further include the following act.

The downlink control channel may further include a bit field indicating a timing relationship or an across subframe scheduling interval k.

When the subframe set used by the downlink traffic channel is the MBSFN subframe set and the set of the available unicast subframes in MBSFN subframes;
if an across subframe scheduling interval k is a predefined fixed value, and a subframe at n+k is a subframe for transmitting a PMCH in the MBSFN subframe set, the method of the disclosure may further include the following act.

A start subframe of subframes used by the downlink traffic channel may be postponed to a first subframe available for transmitting the downlink traffic channel;
where n indicates time of the downlink control channel.

Note that, the subframes of PMCH may include the subframe transmitting a Multimedia Broadcast Multicast Service (MBMS) service.

When content borne by the downlink traffic channel is a paging message, the method of the disclosure may further include the following act.

The subframe set used by the downlink traffic channel and the subframe set used by the downlink control channel, which is used for performing across subframe scheduling of the downlink traffic channel, may be determined in one of the following manners.

Both the downlink control channel and the downlink traffic channel may be determined to use only a limited subframe set, and the downlink control channel and the downlink traffic channel may use the same limited subframe set.

The downlink control channel may be determined to use only a limited subframe set, and an across subframe scheduling interval k may be notified by physical layer signaling or is a determined fixed value;
where the determined fixed value may be that: a same determined fixed value is used for all subframes where the downlink control channel is located; or, an independent determined fixed value is used for each subframe where the downlink control channel is located.

The downlink control channel may be determined to use only a limited subframe set to perform across subframe scheduling for the downlink traffic channel.

In an exemplary embodiment, the limited subframe set may include: a subframe set {0, 1, 4, 5, 6, 9} or a subset of the subframe set {0, 1, 4, 5, 6, 9}.

When it is determined that both the downlink control channel and the downlink traffic channel use only the limited subframe sets, and the downlink control channel and the downlink traffic channel use the same limited subframe set, the method of the disclosure may further include the following act. A value of the across subframe scheduling interval k may be dynamically indicated in physical layer signaling borne by the downlink control channel.

The value of the across subframe scheduling interval k may be dynamically indicated in the following manner.

It may be indicated that the value of the across subframe scheduling interval k is a fixed value 1 and the downlink control channel is located in a subset of the limited subframe set. The limited subframe set is {4, 9} in the FDD system, and the limited subframe set is {0, 5} in the TDD system.

It may be indicated that the value of the across subframe scheduling interval k is a fixed value 4 and the downlink control channel is located in a subset of the limited subframe set. The limited subframe set is {0, 5} in the FDD system, and the limited subframe set is {1, 6} in the TDD system.

It may be indicated that the value of the across subframe scheduling interval k is a fixed value 5 and the downlink control channel is located in a subset of the limited subframe set. The limited subframe set is {0, 4} in the FDD system, and the limited subframe set is {0, 1} in the TDD system.

In the exemplary embodiment, time of the downlink control channel is a subframe n, and the across subframe scheduling interval is k, and time of the downlink traffic channel is n+k.

When it is determined that the downlink control channel uses only the limited subframe set, and the across subframe scheduling interval k is notified by the physical layer signaling or is the determined fixed value, or when it is determined that the downlink control channel uses only the limited subframe set to perform across subframe scheduling for the downlink traffic channel,
the method of the disclosure may further include the following act.

The limited subframe set may be extended to an extended subframe set whose period is changeable.

The extended subframe set may at least include one or more elements in the limited subframe set.

The subframe set used by the downlink traffic channel which is scheduled across subframes through the downlink control channel may be different from the subframe set used by the downlink control channel.

The subframe set used by the downlink traffic channel may be different from the subframe set used by the downlink control channel in the following aspects. Serial numbers of subframes in the subframe set used by the downlink traffic channel and the number of the subframes in the subframe set used by the downlink traffic channel may be partially or completely different from serial numbers of subframes in the subframe set used by the downlink control channel and the number of the subframes in the subframe set used by the downlink control channel.

When the downlink control channel is repeatedly transmitted, and it is determined through the high-layer signaling that the subframe set used by the downlink control channel has an intersection with a subset of an MBSFN subframe set actually transmitting a PMCH subframe or the base station does not configure or predefine the MBSFN subframe set, the method of the disclosure may further include the following act.

The base station may notify the terminal of the subset of the MBSFN subframe set actually transmitting the PMCH subframe or a subset of a set of available MBSFN subframes.

Note that, the repetition (also referred to as repeat transmission) means that the number of transmissions is greater than 1.

In an exemplary embodiment, the subframes available for repeatedly transmitting the downlink control channel may include:
all non-MBSFN subframes; or,
all subframes in the subframe set used by the downlink control channel.

When the downlink control channel repeatedly transmitted for N_ePDCCH times includes a PMCH subframe, all subframes are available for repeatedly transmitting the downlink control channel.

When the downlink control channel repeatedly transmitted for N_ePDCCH times does not include the PMCH subframe, all subframes not transmitting the PMCH channel are available for repeatedly transmitting the downlink control channel.

In an exemplary embodiment, a start subframe of the subframes available for repeatedly transmitting the downlink control channel may be a subset of the available subframes, and a position of the start subframe may be calculated after renumbering is performed according to the available subframes.

When repetition of the downlink control channel supports frequency hopping, the method of the disclosure may further include the following act.

The base station may configure that the frequency hopping of the repetition of the downlink control channel is enabled.

The base station may determine the manner of obtaining the parameters required by the frequency hopping of the repetition of the downlink control channel.

In an exemplary embodiment, the manner of obtaining the parameters required by the frequency hopping may include:
obtaining through a predefined fixed value; or,
obtaining through the predefined variable value; or,
obtaining through the RRC notification; or,
obtaining through the SIB notification.

When the repetition of the downlink control channel supports the frequency hopping, the method of the disclosure may further include the following act.

The base station may configure two downlink control channel narrow bands or two PRB sets for the frequency hopping of downlink control channel transmission.

When the base station configures two PRB sets for the frequency hopping of the downlink control channel transmission, the method of the disclosure may further include the following act. The two configured PRB sets may be respectively located in two different narrow bands, and the two different narrow bands are not adjacent in a frequency domain.

In an exemplary embodiment, the method of the disclosure may further include the following act. Except PRB indexes, other parameters of the two configured PRB sets may be the same.

When repetition of DCI supports frequency hopping, the method of the disclosure may further include the following act. Frequency hopping time and frequency hopping granularity of repetition may be obtained in one or more of the following manners:
when the frequency hopping is performed only once, the frequency hopping time may be fixed at a position N/2;
when the frequency hopping is performed once at most, the frequency hopping time may be at a predefined position;
the frequency hopping for all downlink control channels with different repetition levels may be performed using a public frequency hopping granularity, where the public frequency hopping granularity is Nₘᵢₙ or Nₘᵢₙ/2 as the frequency hopping granularity.

In the exemplary embodiment, N is the number of repetitions of the DCI;
Nₘᵢₙ is the number of repetitions of the downlink control channel corresponding to a lowest repetition level.

When the frequency hopping time is at the predefined position, the predefined position may include:
a subframe 0 of a part of radio frames; or,
a subset of a subframe set in which the PMCH is located.

When the downlink traffic channel is repeatedly transmitted, subframes used for repeatedly transmitting the downlink traffic channel may include:
only non-MBSFN subframes; or,
a subframe set which is notified by the base station and available for downlink traffic channel transmission; or,
a complementary set of a subset of an MBSFN subframe set actually transmitting the PMCH subframe, which is notified to the terminal by the base station; or,
a set composed of a subset of the set of available MBSFN subframes and a non-MBSFN subframe set.

When an end subframe of repeatedly transmitting the downlink control channel is n, and a start subframe of repeatedly transmitting the downlink traffic channel scheduled across subframes is n+k, if k is a determined fixed value and n+k is a PMCH subframe, the method of the disclosure may further include the following act.

A start subframe of subframes used for repeatedly transmitting the downlink traffic channel may be postponed to a first subsequent available subframe.

When repetitions of the downlink traffic channel are performed, if the repetitions include N_PMCH times of transmissions of a PMCH subframe, the number of actual repetitions of the downlink traffic channel may be equal to a total number of repetitions subtracted by N_PMCH.

When repetitions of the downlink traffic channel are performed, a transmission mode of the repetitions of the downlink traffic channel may include that:
the repetition may be performed based on a CRS transmission mode on all subframes; or,
the repetition may be performed based on the CRS mode on a part of subframes, and a pilot frequency is not used on rest subframes; or,
the repetition may be performed based on a DMRS transmission mode on all subframes; or,
the repetition may be performed based on the DMRS transmission mode on a part of subframes, and the pilot frequency is not used on rest subframes; or,
the repetition may be performed based on a CRS and DMRS mixed transmission mode. The repetition may be performed based on the CRS and DMRS mixed transmission mode in a following manner. The repetition may be performed based on the CRS transmission mode on a part of subframes, and the repetition may be performed based on the DMRS transmission mode on rest subframes.

In an exemplary embodiment, the repetition may be performed based on the DMRS transmission mode on all or a part of subframes in a following manner:
all subframes may use the same pilot port and pre-code to repeatedly transmit the downlink traffic channel based on the DMRS transmission mode. Here, the rank of the pre-code may be 1.

When the repetition of the downlink traffic channel supports the frequency hopping, the number of repetitions corresponding to each repetition level of the repetition of the downlink traffic channel may be a tree-like structure.

When repetitions of both the downlink control channel and the downlink traffic channel support frequency hopping, an across subframe scheduling interval k may be 1+m×N_{c}.

In the exemplary embodiment, m=0, 1, 2...; N_{c} is a greatest common divisor of the number of repetitions corresponding to a lowest repetition level of the downlink control channel and the number of repetitions corresponding to a lowest repetition level of the downlink traffic channel;
both the number of repetitions corresponding to a lowest repetition level of the downlink control channel and the number of repetitions corresponding to a lowest repetition level of the downlink traffic channel are positive integers greater than 1.

When the repetition of the downlink traffic channel supports the frequency hopping, the method of the disclosure may further include the following act.

When the downlink traffic channel is repeatedly transmitted on the PUSCH and the PUCCH, the same frequency hopping granularity or frequency hopping interval may be used for the repetitions with different repetition levels.

The same frequency hopping granularity or frequency hopping interval may be a predefined fixed value or a predefined variable value or configured by the base station.

In an exemplary embodiment, the frequency hopping granularity or the frequency hopping interval may include:
a public frequency hopping interval or a public frequency hopping granularity, and/or, a terminal specific frequency hopping interval or a terminal specific frequency hopping granularity.

Note that, by determining the subframe set used by the downlink control channel or the subframe set used by the downlink traffic channel, the base station may ensure the timing relationship in the channel transmission for the MTC UE with low cost, and may ensure the timing relationship in the channel transmission for the coverage enhancement MTC UE. By virtue of the solution, the MTC UE may be ensured to work normally, and the working quality of the system may be improved.

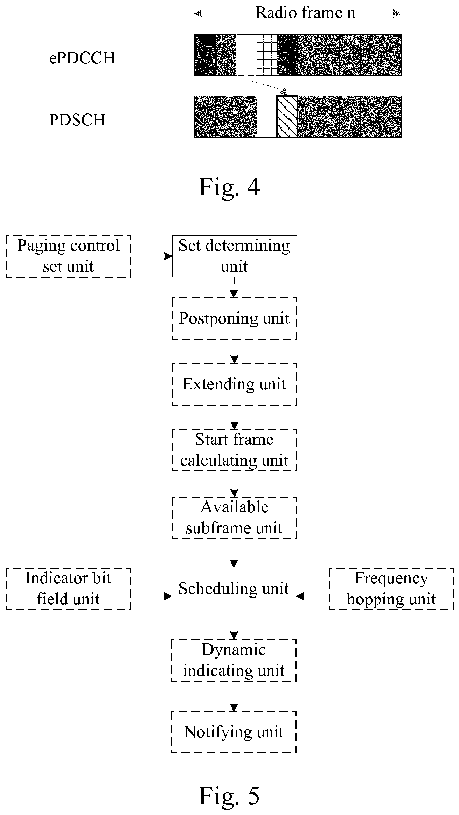

Fig. 4 is a schematic diagram of a method for a downlink control channel to schedule a downlink traffic channel across subframes according to an embodiment of the disclosure. In Fig. 4, the box with oblique lines represents an optional solution ePDCCH of the downlink control channel, the box with right oblique lines represents an optional solution PDSCH of the downlink traffic channel, and the box formed by cross horizontal and vertical lines is the PMCH subframes which include the subframes of the MBMS service. In the related channel transmission process, the timing relationship between the base station and the terminal is easy to be affected. According to the solution provided in some exemplary embodiments of the disclosure, the subframe set used by the downlink control channel and/or the subframe set used by the downlink traffic channel are/is determined, and the downlink traffic channel is scheduled across subframes through the downlink control channel. By virtue of the solution, a timing relationship of channel transmission is prevented, in a narrow band system and a coverage enhancement system, from being affected due to the fact that the MBSFN subframe transmitting the multicast/broadcast service may occupy the entire bandwidth of the system, and the timing relationship between the base station and the terminal may be guaranteed. In this way, normal communication of an MTC UE may be ensured, and the working quality of the system may be improved.

An embodiment of the disclosure provides a computer storage medium, in which a computer executable instruction is stored. The computer executable instruction may be used for performing the above method.

Fig. 5 is a structure diagram of a base station for realizing channel transmission according to an embodiment of the disclosure. As shown in Fig. 5, the base station includes: a set determining unit and a scheduling unit.

The set determining unit may be configured to determine the subframe set used by the downlink control channel and/or the subframe set used by the downlink traffic channel.

The scheduling unit may be configured to perform across subframe scheduling for the downlink traffic channel through the downlink control channel.

The set determining unit may be configured to determine the subframe set used by the downlink control channel according to a predefined mode or high-layer signaling, and/or,
indicate through the MTC system message, or dynamically indicate through the physical layer signaling, or determine according to a predefined mode, or determine through high-layer signaling configuration the subframe set used by the downlink traffic channel.

The set determining unit may be configured to,
determine, according to the predefined mode, the subframe set used by the downlink control channel as the non-MBSFN subframe set, or,
determine, according to the high-layer signaling, the subframe set used by the downlink control channel as a set including MBSFN subframes;
where the non-MBSFN subframe set is a set of all non-MBSFN subframes.

Alternatively or additionally, the set determining unit may be configured to indicate through the MTC system message that the subframe set used by the downlink traffic channel is the MBSFN subframe set and the set of available unicast subframes in MBSFN subframes, or,
indicate the MBSFN subframe set through the MTC system message, and indicate that the downlink traffic channel uses only non-MBSFN subframes; or,
dynamically indicate through the physical layer signaling the subframe set used by the downlink traffic channel in the following manner: dynamically indicating through the physical layer signaling the across subframe scheduling interval, so as to determine one or more subframes used by the downlink traffic channel; or,
indicating through the physical layer signaling that an subframe scheduled by across subframe scheduling is available, or indicating through the physical layer signaling a subframe that the across subframe scheduling needs to skip.

The base station of the embodiment of the disclosure may further include an indicator bit field unit. The indicator bit field unit may be configured to, when the downlink control channel bears the uplink scheduling grant message, fill in the downlink control channel a bit field indicating the timing relationship or an across subframe scheduling interval k.

The base station of the embodiment of the disclosure may further include a postponing unit. The postponing unit may be configured to, when the subframe set used by the downlink traffic channel is the MBSFN subframe set and the set of available unicast subframes in MBSFN subframes,
if the across subframe scheduling interval k is the predefined fixed value, and n+k is in the subframe transmitting the PMCH in the MBSFN subframe set,
postpone a start subframe of subframes used by the downlink traffic channel to a first subframe available for transmitting the downlink traffic channel;
where n indicates time of the downlink control channel.

The base station of the embodiment of the disclosure may further include a paging control set unit. The paging control set unit may be configured to, when content borne by the downlink traffic channel is the paging message, determine the subframe set used by the downlink traffic channel and the subframe set used by the downlink control channel, which is used for performing across subframe scheduling of the downlink traffic channel, in one of the following manners:
determining that both the downlink control channel and the downlink traffic channel use only the limited subframe sets, and the used limited subframe sets are the same;
determining that the downlink control channel uses only a limited subframe set, and an across subframe scheduling interval k is notified by the physical layer signaling, or is the determined fixed value;
where the determined fixed value may be that: a same determined fixed value is used for all subframes where the downlink control channel is located; or, an independent determined fixed value is used for each subframe where the downlink control channel is located;
determining that the downlink control channel uses only a limited subframe set to perform across subframe scheduling for the downlink traffic channel.

The base station of the embodiment of the disclosure may further include a dynamic indicating unit. The dynamic indicating unit may be configured to, when the across subframe scheduling interval is k, dynamically indicate a value of the across subframe scheduling interval k in physical layer signaling borne by the downlink control channel.

The dynamic indicating unit may be configured to dynamically indicate the value of the across subframe scheduling interval k in the following manner:
indicating that the value of the across subframe scheduling interval k is a fixed value 1 and the downlink control channel is located in a subset of the limited subframe set, where the limited subframe set is {4, 9} in the FDD system, and the limited subframe set is {0, 5} in the TDD system;
indicating that the value of the across subframe scheduling interval k is a fixed value 4 and the downlink control channel is located in a subset of the limited subframe set, where the limited subframe set is {0, 5} in the FDD system, and the limited subframe set is {1, 6} in the TDD system;
indicating that the value of the across subframe scheduling interval k is a fixed value 5 and the downlink control channel is located in a subset of the limited subframe set, where the limited subframe set is {0, 4} in the FDD system, and the limited subframe set is {0, 1} in the TDD system.

The base station of the embodiment of the disclosure may further include an extending unit. The extending unit may be configured to, when it is determined that the downlink control channel uses only the limited subframe set, and the across subframe scheduling interval k is notified by the physical layer signaling or is the determined fixed value, or when it is determined that the downlink control channel uses only the limited subframe set to perform across subframe scheduling for the downlink traffic channel,
extend the limited subframe set to the extended subframe set whose period is changeable.

The extended subframe set may at least include one or more elements in the limited subframe set.

The subframe set used by the downlink traffic channel which is scheduled across subframes through the downlink control channel may be different from the subframe set used by the downlink control channel.

The subframe set used by the downlink traffic channel may be different from the subframe set used by the downlink control channel in the following aspects. Serial numbers of subframes in the subframe set used by the downlink traffic channel and the number of the subframes in the subframe set used by the downlink traffic channel may be partially or completely different from serial numbers of subframes in the subframe set used by the downlink control channel and the number of the subframes in the subframe set used by the downlink control channel.

The base station of the embodiment of the disclosure may further include a notifying unit. The notifying unit may be configured to, when the downlink control channel is repeatedly transmitted, and it is determined through the high-layer signaling that the subframe set used by the downlink control channel has an intersection with a subset of an MBSFN subframe set actually transmitting the PMCH subframe or the base station does not configure or predefine the MBSFN subframe set,
notify the terminal of the subset of the MBSFN subframe set actually transmitting the PMCH subframe or a subset of a set of available MBSFN subframes.

The base station of the embodiment of the disclosure may further include an available subframe unit. The available subframe unit may be configured to determine the available subframes for repeatedly transmitting the downlink control channel as:
all MBSFN subframes; or,
all subframes in the subframe set used by the downlink control channel.

When the downlink control channel repeatedly transmitted for N_ePDCCH times includes a PMCH subframe, all subframes may be available for repeatedly transmitting the downlink control channel.

When the downlink control channel repeatedly transmitted for N_ePDCCH times does not include the PMCH subframe, all subframes not transmitting the PMCH channel may be available for repeatedly transmitting the downlink control channel.

The base station of the embodiment of the disclosure may further include a start subframe calculating unit. The start subframe calculating unit may be configured to calculate a start subframe of the subframes available for repeatedly transmitting the downlink control channel after renumbering is performed according to the available subframes.

A start subframe of the subframes available for repeatedly transmitting the downlink control channel may be a subset of the available subframes.

The base station of the embodiment of the disclosure may further include a frequency hopping unit. The frequency hopping unit may be configured to, when the repetition of the downlink control channel supports the frequency hopping, determine that the frequency hopping of the repetition of the downlink control channel is enabled.

The act that the frequency hopping of the repetition of the downlink control channel is enabled may include that: the manner of obtaining the parameters required by the frequency hopping of the repetition of the downlink control channel may be determined.

The manner of obtaining the parameters required by the frequency hopping may include:
obtaining through a predefined fixed value; or,
obtaining through the predefined variable value; or,
obtaining through the RRC notification; or,
obtaining through the SIB notification.

The base station of the embodiment of the disclosure may further include a frequency hopping unit. The frequency hopping unit may be configured to, when the repetition of the downlink control channel supports the frequency hopping, configure two downlink control channel narrow bands or two PRB sets for the frequency hopping of the downlink control channel transmission.

The frequency hopping unit may be further configured to, when the repetition of the DCI supports the frequency hopping, obtain the frequency hopping time and the frequency hopping granularity of the repetition in one or more of the following manners:
when the frequency hopping is performed only once, the frequency hopping time may be fixed at a position N/2;
when the frequency hopping is performed once at most, the frequency hopping time may be at the predefined position;
the frequency hopping for all downlink control channels with different repetition levels is performed using a public frequency hopping granularity, where the public frequency hopping granularity is Nₘᵢₙ or Nₘᵢₙ/2.

In the embodiment, N is the number of repetitions of the DCI;
Nₘᵢₙ is the number of repetitions of the downlink control channel corresponding to a lowest repetition level.

The start subframe calculating unit may be further configured to decide a start subframe of the subframes used for the repetition of the downlink traffic channel according to the across subframe scheduling interval k.

The postponing unit may be further configured to, when an end subframe of repeatedly transmitting the downlink control channel is n, and a start subframe of repeatedly transmitting the downlink traffic channel scheduled across subframes is n+k, if k is a determined fixed value and n+k is a PMCH subframe, postpone a start subframe of subframes used for repeatedly transmitting the downlink traffic channel to a first subsequent available subframe.

The frequency hopping unit may be further configured to, when the repetitions of the downlink traffic channel supports the frequency hopping,
and the downlink traffic channel is repeatedly transmitted on the PUSCH and the PUCCH, use a same frequency hopping granularity or frequency hopping interval for repetitions with different repetition levels.

The same frequency hopping granularity or frequency hopping interval may be a predefined fixed value or a predefined variable value or configured by the base station.

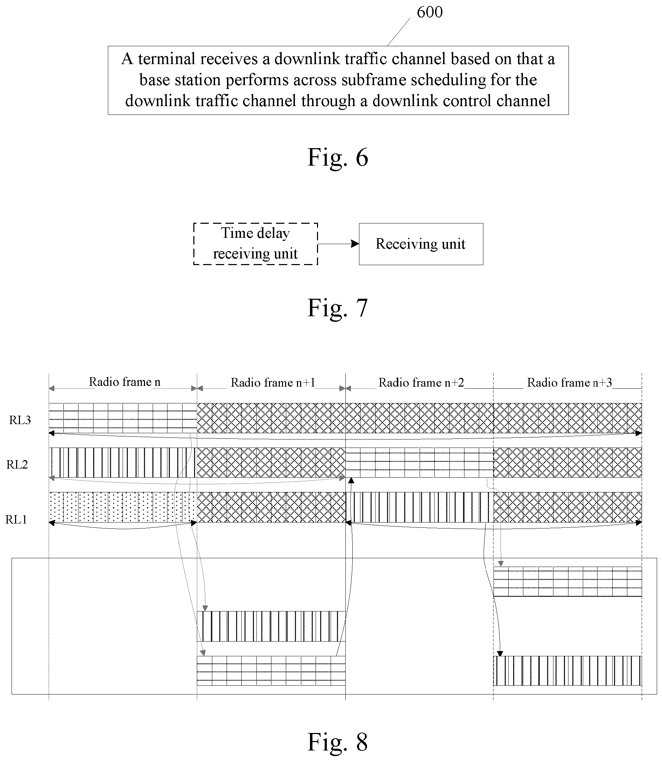

Fig. 6 is a flowchart of another method for realizing channel transmission according to an embodiment of the disclosure. As shown in Fig. 6, the method includes that following act.

At act S600, a terminal may receive a downlink traffic channel based on that a base station performs across subframe scheduling for the downlink traffic channel through a downlink control channel.

Note that, after receiving the downlink control channel according to the across subframe scheduling performed by the base station, the terminal may acquire the DCI by parsing the downlink control channel, and may receive the downlink traffic channel according to the DCI.

When the subframe set used by the downlink traffic channel which is scheduled across subframes by the base station is the set of the available unicast subframes in MBSFN subframes,
if the across subframe scheduling interval k is the predefined fixed value, and n+k is in the subframe transmitting the PMCH in the MBSFN subframe set, the method of the disclosure may further include the following act.

The terminal may postpone receiving a start subframe of subframes used by the downlink traffic channel to a first subframe available for receiving;
wherein n indicates time of the downlink control channel.

When an end subframe of repeatedly transmitting the downlink control channel is n, and a start subframe of repeatedly transmitting the downlink traffic channel scheduled across subframes is n+k, if k is a determined fixed value and n+k is a PMCH subframe, the method of the disclosure may further include the following act.

The terminal may postpone receiving a start subframe of subframes used for repeatedly transmitting the downlink traffic channel to a first subsequent available subframe.

Another embodiment of the disclosure provides a computer storage medium, in which a computer executable instruction is stored. The computer executable instruction may be used for performing the above method.

Fig. 7 is a structure diagram of a base station for realizing channel transmission according to an embodiment of the disclosure. As shown in Fig. 7, the base station includes a receiving unit. The receiving unit may be configured to receive the downlink traffic channel based on that the base station performs across subframe scheduling for the downlink traffic channel through the downlink control channel.

The terminal of the embodiment of the disclosure may further include a receiving postponing unit. The receiving postponing unit may be configured to, when the subframe set used by the downlink traffic channel which is scheduled across subframes by the base station is the set of the available unicast subframes in MBSFN subframes, if the across subframe scheduling interval k is the predefined fixed value, and n+k is in the subframe transmitting the PMCH in the MBSFN subframe set,
postpone receiving a start subframe of subframes used by the downlink traffic channel to a first subframe available for receiving;
where n indicates time of the downlink control channel.

The terminal of the embodiment of the disclosure may further include a receiving postponing unit. The receiving postponing unit may be configured to, when an end subframe of repeatedly transmitting the downlink control channel is n, and a start subframe of repeatedly transmitting the downlink traffic channel scheduled across subframes is n+k, if k is a determined fixed value and n+k is a PMCH subframe,
postpone receiving a start subframe of subframes used for repeatedly transmitting the downlink traffic channel to a first subsequent available subframe.

The method of the embodiment of the disclosure is elaborated below through specific application examples. The application examples are only used for explaining the solution of the disclosure, but are not intended to limit the scope of protection of the method.

### First application example

In the present application example, the ePDCCH serves as the downlink control channel, and the PDSCH serves as the downlink traffic channel.

There are three subframe sets used by the ePDCCH and sent by the base station. The first is the MBSFN subframes; the second is the subframe set configured through the high-layer signaling; and the third is all the available subframes.

There are three situations where the corresponding terminal detects the subframe sets used by the ePDCCH. The first is detecting the MBSFN subframes; the second is detecting the subframe set configured through the high-layer signaling; and the third is detecting in all the available subframes.

At the base station side, the ePDCCH schedules the PDSCH across subframes. If the across subframe scheduling interval is k, the optional time of transmitting the subframe used by the ePDCCH is n, the time of transmitting the subframe used by the PDSCH is n+k.

The base station may indicate the MBSFN subframe set through the MTC system message (optionally the MTC SIB) and may indicate the set of available unicast subframes in the MBSFN subframes. In this case, when k is the predefined fixed value, if the position n+k happens to be in the subframe for transmitting PMCH in the MBSFN subframe set (here, the PMCH subframe includes the subframe of the MBMS service), then the frame may be postponed to the first subframe available for transmitting the PDSCH. When k is the predefined variable value, for example, it may be indicated by the physical layer signaling (DCI), in the implementation, the subframe for transmitting the PDSCH will not conflict with the subframe for transmitting the PMCH.

The base station may indicate the MBSFN subframe set through the MTC SIB. In this case, when k is the predefined fixed value, no MBSFN subframe will be used by the MTC system, thereby no conflict with the PMCH subframe may be caused. The subframe not transmitting the PMCH in the MBSFN subframe set may be used by a traditional terminal (legacy UE).

The base station may dynamically indicate through the physical layer signaling the across subframe scheduling interval k or may indicate that the subframe for the across subframe scheduling is available, or may indicate through the physical layer signaling a subframe that the across subframe scheduling needs to skip, so as to determine one or more subframes used by the downlink traffic channel. That is, the base station may indicate whether the subframe for the across subframe scheduling is available or needs to be skipped, where the subframe needing to be skipped is unavailable. If an across subframe scheduling interval k is notified by the DCI, a value of the across subframe scheduling interval k may be dynamically adjusted, so the subframe for transmitting the ePDCCH will not influence PDSCH transmission, whether the MBSFN subframe set and the PMCH subframe set are known or not. For the situation where the DCI indicates whether the subframe for the across subframe scheduling is available or needs to be skipped, the MBSFN subframes transmitting the PMCH are indicated to be unavailable or skipped.

The base station may determine according to a predefined mode or determine through high-layer signaling configuration the subframe set used by the downlink traffic channel. As such, whether the across subframe scheduling interval is fixed or not, only the downlink traffic channel which is scheduled across subframes is in the subframe set used by the downlink traffic channel, the channel may be transmitted normally. In an exemplary embodiment, during the across subframe scheduling, the PDSCH can appear, based on the DMRS transmission mode, in the MBSFN subframes without the PMCH subframes or in the non-MBSFN subframes.

When the uplink scheduling grant message for scheduling the PUSCH is carried in the ePDCCH, the uplink scheduling grant message includes the bit field indicating the timing relationship k. In the exemplary embodiment, if the subframe transmitting the ePDCCH is n, the subframe transmitting the PUSCH is n+k, where k may be an integer greater than 4. Certainly, k may also be an integer greater than 1 and less than 4.

For a problem of the uplink scheduling grant message, the legacy UE may receive the uplink scheduling grant message in a PDCCH area in the MBSFN subframes, and the MTC UE cannot send the uplink scheduling grant message in the subframe actually transmitting the PMCH in the MBSFN subframe set. If the PUSCH is sent at the time n for keeping uplink timing, the uplink scheduling grant message may need to be sent at the time n-4. If n-4 is exactly the MBSFN subframe actually transmitting the PMCH, then the uplink scheduling grant message cannot be sent if the timing relationship n-4 is to be kept. If the base station deals with the problem, it is assumed that the base station schedules the subframe n for the PUSCH transmission, but finds that the subframe n-4 is the subframe transmitting the PMCH, then the base station may avoid scheduling the PUSCH transmission of the MTC UE on the subframe n and provide this resource to the legacy UE. That is, the base station may avoid the above problem by virtue of scheduling. The problem may also be solved by notifying the timing relationship. In an exemplary embodiment, if the base station has to schedule the PUSCH transmission of the MTC UE on the subframe n, and the subframe n-4 is the MBSFN subframe transmitting the PMCH subframe, then the base station may send the uplink scheduling grant message ahead by one or more subframes, and add in the message the physical layer signaling indicating the timing relationship. Moreover, with an enhancement of the processing capacity of the base station and the terminal, the interval of scheduling the PUSCH by the uplink scheduling grant message may be allowed to be reduced, so if the subframe n-4 cannot send the uplink scheduling grant message, the value of the across subframe scheduling interval k less than 4 may also be taken into consideration.

If an end subframe of repeatedly transmitting the PUSCH is n, the channel carrying feedback information ACK/NACK about whether the PUSCH transmission is correct may be fixed on the subframe n+k (in the FDD system, k=4; in the TDD system, different instants of fixed feedback time may be configured according to different UL/DL subframes, namely k≥4). If a feedback channel uses only non-MBSFN subframes, when encountering the MBSFN subframe, n+k may be postponed to the first subsequent available subframe as the start subframe of the feedback channel, and the subsequent repetition also uses only non-MBSFN subframes. If the feedback channel can use the MBSFN subframe not transmitting the PMCH subframe, when encountering the PMCH subframe, n+k may be postponed to the first subsequent available subframe as the start subframe of the feedback channel, and the subsequent repetition may use the non-MBSFN subframe and the MBSFN subframe not transmitting the PMCH subframe.

In an exemplary embodiment, when content borne by the PDSCH is the paging message, the subframe set used by the PDSCH and the subframe set used by the ePDCCH across subframe scheduling the PDSCH may meet one of the following three situations. In a first condition, both the ePDCCH and the PDSCH use only a limited subframe set, and the downlink control channel and the downlink traffic channel use the same limited subframe set, optionally including the subframe set {0, 1, 4, 5, 6, 9} or its subset. For example, the subframe set is {0, 4, 5, 9} in the FDD system, and the subframe set is {0, 1, 5, 6} in the TDD system. If the time of the ePDCCH is n, the across subframe scheduling interval is k, and the time of the PDSCH is the subframe n+k, the across subframe scheduling interval k should satisfy that the subframe n+k is in the limited subframe set. Optionally, one of the following manners may be adopted. 1) The DCI carried by the ePDCCH includes the indication of a value of the across subframe scheduling interval k; 2) k is indicated to be the fixed value 1 and the ePDCCH is in the subset of the limited subframe set; the subframe set is {4, 9} in the FDD system, and the subframe set is {0, 5} in the TDD system; 3) k is indicated to be the fixed value 4 and the ePDCCH is in the subset of the limited subframe set; the subframe set is {0, 5} in the FDD system, and the subframe set is {1, 6} in the TDD system; 4) k is indicated to be the fixed value 5 and the ePDCCH is in the subset of the limited subframe set; the subframe set is {0, 4} in the FDD system, and the subframe set is {0, 1} in the TDD system. In a second condition, the ePDCCH uses only the limited subframe set; optionally, the subframe set is {0, 4, 5, 9} in the FDD system, and the subframe set is {0, 1, 5, 6} in the TDD system. A value of the across subframe scheduling interval k may be notified by the DCI or is the predefined fixed value. The determined fixed value may be that a same determined fixed value is used for all subframes where the downlink control channel is located; or, an independent determined fixed value is used for each subframe where the downlink control channel is located. Optionally, the limited subframe set may be extended to the extended subframe set whose period is changeable. For example, the base station may configure a set greater than the subframe set according to a use condition of the subframe actually transmitting the PMCH; optionally, the subframe set is {0, 1, 4, 5, 6, 9} in the FDD system. In the exemplary embodiment, for the subframe set used by the PDSCH which is scheduled by the ePDCCH across subframes and the subframe set used by the ePDCCH, serial numbers of subframes in the subframe set used by the downlink traffic channel and the number of the subframes in the subframe set used by the downlink traffic channel may be partially or completely different from serial numbers of subframes in the subframe set used by the downlink control channel and the number of the subframes in the subframe set used by the downlink control channel. In a third condition, the ePDCCH only uses the limited subframe set to schedule the PDSCH across subframes; optionally, the subframe set is {0, 4, 5, 9} in the FDD system, and the subframe set is {0, 1, 5, 6} in the TDD system. A value of the across subframe scheduling interval k may be notified by the DCI or is the predefined fixed value. In the exemplary embodiment, the limited subframe set may be extended to the extended subframe set whose period is changeable. The extended subframe set may at least include one or more elements in the limited subframe set. For example, the base station may configure a set greater than the subframe set according to a use condition of the subframe actually transmitting the PMCH; optionally, the subframe set is {0, 1, 4, 5, 6, 9} or {0, 1, 2, 3} in the FDD system. In the embodiment, for the subframe set used by the PDSCH which is scheduled by the ePDCCH across subframes and the subframe set used by the ePDCCH, serial numbers of subframes in the subframe set used by the downlink traffic channel and the number of the subframes in the subframe set used by the downlink traffic channel may be partially or completely different from serial numbers of subframes in the subframe set used by the downlink control channel and the number of the subframes in the subframe set used by the downlink control channel.

### Second application example

In the present application example, the ePDCCH serves as the downlink control channel, and the PDSCH serves as the downlink traffic channel. The following is mainly about the situation of across subframe scheduling for repetition when the coverage is enhanced.

There are three subframe sets used by the ePDCCH repeatedly transmitted and sent by the base station: the first is the non-MBSFN subframes; the second is the subframe set configured through the high-layer signaling; and the third is all the available subframes. There are three situations where the corresponding terminal detects the subframe sets used by the ePDCCH: the first is detecting the non-MBSFN subframes; the second is detecting in the subframe set configured through the high-layer signaling; and the third is detecting in all the subframes. If the subframe set configured through the high-layer signaling has an intersection with a subset of an MBSFN subframe set actually transmitting the PMCH subframe, the base station may need to notify the terminal of the subset of the MBSFN subframe set actually transmitting the PMCH subframe or a subset of a set of available MBSFN subframes. When the subframe set used by the ePDCCH includes all the available subframes, the base station may need to notify the terminal of the subset of the MBSFN subframe set actually transmitting the PMCH subframe or the subset of the set of available MBSFN subframes.

When the ePDCCH is repeatedly transmitted, the start frame is limited to a part of subframes in the available subframes. In a first situation, when the start frame of the ePDCCH is calculated, the start subframe is calculated after renumbering all non-MBSFN subframes as the available subframes. In a second situation, when the N_ePDCCH repetitions include the PMCH subframe, the start subframe is calculated by taking all the subframes as the available subframes; and when the N_ePDCCH repetitions do not include the PMCH subframe, the start subframe is calculated after renumbering all the subframes not transmitting the PMCH as the available subframes.

When the ePDCCH is repeatedly transmitted for N_ePDCCH times, and based on the above three situations, both the base station and the terminal may learn the subset of the MBSFN subframe set actually transmitting the PMCH subframe or the subset of the set of available MBSFN subframes. In the first situation, the N_ePDCCH repetitions do not include the MBSFN subframes. In the second situation, when the subframe set does not have an intersection with the subset of the MBSFN subframe set actually transmitting the PMCH subframe, the N_ePDCCH repetitions do not include the PMCH subframe. When, in the second situation, the subframe set has an intersection with the subset of the MBSFN subframe set actually transmitting the MBMS service and in the third situation, it may be necessary to indicate the PMCH subframe in combination with pattern. When the N_ePDCCH repetitions include the PMCH subframe, the number of actual repetitions is N_ePDCCH-N_PMCH, where N_PMCH is the number of PMCH transmissions included in the N_ePDCCH repetitions of the ePDCCH. When the N_ePDCCH repetitions do not include the PMCH subframe, the number of repetitions is N_ePDCCH plus N_PMCH, where N_PMCH is the number of PMCH transmissions included in the N_ePDCCH plus N_PMCH repetitions of the ePDCCH.

If the repetition of the ePDCCH supports the frequency hopping, whether to use the ePDCCH frequency hopping may be configured through the high-layer signaling. That is, a default method is not to use the frequency hopping, but the network side is also allowed to enable the frequency hopping. Because the downlink control channel adopts the ePDCCH, if the system bandwidth can be measured accurately in a coverage enhancement scenario, a gain on a frequency domain may be obtained by scheduling. Note that, in the coverage enhancement scenario, the measurement is not so real-time like the legacy UE, so a repetition only depends on a previous measurement. Using the frequency-hopping mode can obtain the gain on the frequency domain without depending on the measurement. So, using the frequency hopping mode is not necessary, but configurable, to the ePDCCH. The manner of obtaining the parameters required by the frequency hopping of the repetition of the ePDCCH may include a predefined fixed value or a predefined variable value, which is notified by the RRC or the SIB. The parameters required by the frequency hopping may include frequency hopping pattern indication, and/or a frequency domain position of the frequency hopping, and/or the frequency hopping granularity. In the exemplary embodiment, when the ePDCCH supports the frequency hopping, two downlink control channel narrow bands or two PRB sets may be configured for the frequency hopping transmission of the ePDCCH. The base station may configure two PRB sets for the frequency hopping transmission of the ePDCCH. Optionally, the two PRB sets may be on different narrow bands, and the two different narrow bands are not adjacent on the frequency domain position. In the exemplary embodiment, except the PRB indexes, other parameters of the two PRB sets may be the same.

The frequency hopping time and the frequency hopping granularity of the ePDCCH may be determined in one or more of the following manners. 1) The ePDCCH is repeatedly transmitted for N times, the frequency hopping may be performed only once, and the frequency hopping time may be fixed at a position N/2. Optionally, the frequency hopping has two subdivided modes at a position N/2: the first is that N/2 transmissions after frequency hopping are started at the following subframe N/2+1; and the second is that N/2 transmissions after frequency hopping are started at the subframe Nₘₐₓ/2+1, where Nₘₐₓ is the number of repetitions corresponding to the highest repetition level. 2) The ePDCCH is repeatedly transmitted for N times, the frequency hopping may be performed once at most, and the frequency hopping time may be at a predefined position. For example, all the repetitions of the ePDCCH with different repetition levels may perform the frequency hopping at a subframe 0 of the radio frame n, optionally n is an integer greater than and equal to 0, or n mod 2=0. The subframe where a part of PMCHs are located serves as the frequency hopping time, at the same time, the PMCH subframe can serve as returning time. 3) The ePDCCH is repeatedly transmitted for N times, the ePDCCHs with different repetition levels take Nₘᵢₙ or Nₘᵢₙ/2 as the frequency hopping granularity, where Nₘᵢₙ is the number of repetitions of the ePDCCH corresponding to a lowest repetition level. The ePDCCH with higher repetition level may perform the frequency hopping for many times, optionally N/Nₘᵢₙ times or 2N/Nₘᵢₙ times, and the ePDCCH with the lowest repetition level may not perform the frequency hopping or may perform the frequency hopping once.

If an end subframe of repeatedly transmitting the ePDCCH is n, a start subframe of repeatedly transmitting the PDSCH is n+k. If the k is the predefined fixed value, n+k may be postponed to the first subsequent available subframe when encountering the PMCH subframe. If the k is the predefined variable value, the start frame of the PDSCH scheduled by the base station will not conflict with the PMCH subframe. There are three types of subframe sets used by the repetition of the PDSCH as follows. First, only non-MBSFN subframes are used, and N_ePDCCH repetitions do not include MBSFN subframes. Second, the base station may notify the subframe set available for transmitting the PDSCH, if the subframe set does not have an intersection with the subset of the MBSFN subframe set actually transmitting the PMCH subframe, the N_ePDCCH repetitions do not include the PMCH subframe; if the subframe set has an intersection with the subset of the MBSFN subframe set actually transmitting the PMCH subframe, the base station may need to notify the terminal of the subset of the MBSFN subframe set actually transmitting the PMCH subframe or the subset of the set of available MBSFN subframes. Third, the base station may notify the terminal of the subset of the MBSFN subframe set actually transmitting the PMCH subframe or the subset of the set of available MBSFN subframes. When the N_PDSCH repetitions include the PMCH subframe, the number of actual transmissions of the PDSCH is N_PDSCH subtracted by N_PMCH, where N_PMCH is the number of PMCH transmissions included in the N_PDSCH PDSCH repetitions. When the N_PDSCH repetitions do not include the PMCH subframe, the number of actual transmissions of the PDSCH is N_PDSCH plus N_PMCH, where N_PMCH is the number of PMCH repetitions included in the N_PDSCH plus N_PMCH PDSCH repetitions.

There are three transmission modes used for the repetition of the PDSCH as follows. The first is the CRS transmission mode. Optionally, all the subframes for the repetition may use the non-MBSFN subframes, the CRS pilot frequency is not used. Alternatively, all the subframes for the repetition may use the non-MBSFN subframes or the MBSFN subframes not transmitting the MBMS service. The pilot frequency is not used in the MBSFN subframe not transmitting the PMCH subframe, and the CRS pilot frequency is used in the non-MBSFN subframe. A multi-subframe channel estimation result using the CRS pilot frequency compensates data information in the subframe not using the pilot frequency. The second is the DMRS transmission mode. Optionally, all the subframes for the repetition are the non-MBSFN subframes and/or the MBSFN subframe not transmitting the MBMS service, and the DMRS pilot frequency is used. All the subframes for the repetition use the same pilot frequency port and pre-code, and the pre-code rank is 1 (RI=1); or all the subframes for the repetition are the non-MBSFN subframes, or all the subframes for the repetition are the non-MBSFN subframes and the MBSFN subframes not transmitting the PMCH subframe. The pilot frequency is not used in a part of subframes, and the DMRS pilot frequency is used in rest subframes. The multi-subframe channel estimation result using the DMRS pilot frequency compensates data information in the subframe not using the pilot frequency. The third is the CRS and DMRS mixed transmission mode. Optionally, all the subframes for the repetition are the non-MBSFN subframes and/or the MBSFN subframes not transmitting the PMCH subframe. The CRS pilot frequency is used in a part of subframes, and the DMRS pilot frequency is used in a part of subframes. When the number of continuous subframes using one pilot frequency is greater than and equal to 4, the multi-subframe channel estimation based on the pilot frequency may be used. When the number of continuous subframes using one pilot frequency is 1, the result of single-subframe channel estimation using the pilot frequency or the result of multi-subframe channel estimation using the adjacent same pilot frequency may be used for compensating the data information in the subframe. Based on the three situations, the number X of subframes of the minimum multi-subframe channel estimation unit may be different according to different pilot frequencies. For example, in the same repetition, the number X of subframes of the minimum multi-subframe channel estimation unit based on the CRS may be less than the number X of subframes of the minimum multi-subframe channel estimation unit based on the DMRS.

When the repetition of the PDSCH supports the frequency hopping, optionally, the number of repetitions corresponding to each repetition level of the repetition of the PDSCH may be a tree-like structure (also called a nest structure). That is, the number of repetitions corresponding to the higher repetition level may be a multiple of the number of repetitions corresponding to the lower repetition level. When the repetitions of both the ePDCCH and the PDSCH support the frequency hopping, optionally, an across subframe scheduling interval k is 1+m×N_{c}, where m=0, 1, 2...; N_{c} is a greatest common divisor of the number of repetitions corresponding to a lowest repetition level of the ePDCCH and the number of repetitions corresponding to a lowest repetition level of the PDSCH. All the numbers of repetitions are positive integers greater than 1.

When the repetition of the PDSCH supports the frequency hopping, and the PUSCH and the PUCCH are repeatedly transmitted, the frequency hopping granularity and the frequency hopping time may be determined as follows. Different repetition levels use the same frequency hopping granularity or frequency hopping interval, where the same frequency hopping granularity or frequency hopping interval may be a predefined fixed value or a predefined variable value or may be configured by the base station. For the downlink traffic channel, optionally, the number of repetitions corresponding to a lowest repetition level of the PDSCH or half of the number of repetitions corresponding to a lowest repetition level serves as the frequency hopping granularity; or a greatest common divisor of the number of repetitions corresponding to a lowest repetition level of the ePDCCH and the number of repetitions corresponding to a lowest repetition level of the PDSCH serves as the frequency hopping granularity, wherein the number of repetitions is a positive integer greater than 1. Optionally, for the PUSCH and the PUCCH, the number of repetitions corresponding to their lowest repetition level or half of the number of repetitions corresponding to their lowest repetition level serves as the frequency hopping granularity; or a greatest common divisor of the number of repetitions corresponding to a lowest repetition level of the PUCCH and the number of repetitions corresponding to a lowest repetition level of the PUSCH serves as the frequency hopping granularity. The number of repetitions is a positive integer greater than 1. Optionally, for the uplink traffic channel, each channel may perform the frequency hopping at the public frequency hopping interval or the public frequency hopping granularity. It may also be configured through the high-layer signaling that each uplink channel of each terminal performs the frequency hopping at a UE specific frequency hopping interval or a UE specific frequency hopping granularity. The method for determining the public frequency hopping interval or the public frequency hopping granularity and the UE specific frequency hopping interval or the UE specific frequency hopping granularity is the same as the method for determining the frequency hopping interval or the frequency hopping granularity.

Fig. 8 is a schematic diagram of a frequency hopping granularity of the number of repetitions corresponding to a lowest repetition level of repetition in a coverage enhancement mode according to a first application example of the disclosure. As shown in Fig. 8, the box with horizontal grids represents the frequency hopping granularity with the higher repetition level, the box with vertical grids represents the frequency hopping granularity with medium repetition level, and the grid with dot represents the frequency hopping granularity with the lower repetition level.

By using the method for transmitting the downlink control channel and the downlink traffic channel presented in the application examples of the disclosure, a problem of inconsistent timing sequence, caused by the fact that the MTC UE with low cost and the MTC UE with low cost in the coverage enhancement scenario cannot learn, during the across subframe scheduling, the subset of the MBSFN subframe set actually transmitting the PMCH subframe, may be solved, and the normal and effective communication of the MTC UE may be ensured.

### Third application example

The present application example elaborates that the downlink control channel and the downlink traffic channel are transmitted by using the method provided by the disclosure.

The base station may first send an MTC specific system indication message for the MTC UE, and may notify, through the system indication message, the MTC terminal of the MBSFN subframe set in this cell and the set of subframes actually transmitting the PMCH.

When the MTC UE transmits downlink service information, because the same subframe of the MTC UE can only receive the resource on a narrow band and the downlink control channel occupies an independent narrow resource, the base station may schedule the PDSCH of the MTC UE with low cost across subframes through the ePDCCH. The downlink service information may be carried on the PDSCH.

Because the across subframe scheduling interval k is a predefined fixed value, for example, k=1, the terminal blindly detects the received ePDCCH on the narrow band resource of the downlink control channel of each subframe, and the ePDCCH of the terminal may be detected on the subframe n. The subframe n on which the ePDCCH is located is the non-MBSFN subframe, the subframe where the PDSCH is scheduled across subframes is n+1. Because the subframe n+1 is the MBSFN subframe actually transmitting the PMCH, the base station postpones to the first subsequent available subframe. Because the subframe n+2 is the non-MBSFN subframe, the base station postpones to the subframe n+2 to transmit the narrow-band PDSCH, and the terminal may receive the narrow-band PDSCH in the subframe n+2.

According to the present application example, notifying the MTC terminal with low cost of the subset of the MBSFN subframe set actually transmitting the PMCH can enable the MTC terminal with low cost to effectively learn the time of transmitting the downlink traffic channel of the terminal when the across subframe scheduling interval is fixed, and ensure the consistent timing sequences of the base station side and the terminal side.

### Fourth application example

The present application example elaborates that the downlink control channel and the downlink traffic channel are transmitted by using the method provided by the disclosure.

The base station may first send the MTC specific system indication message for the MTC UE, and may notify, through the system indication message, the MTC terminal of the MBSFN subframe set in this cell and the set of subframes where the ePDCCH is located.

When the MTC UE transmits the downlink service information, because the same subframe of the MTC UE can only receive the resource on a narrow band and the downlink control channel occupies the independent narrow resource, the base station schedules the PDSCH of the MTC UE with low cost across subframes through the ePDCCH. The downlink service information may be carried on the PDSCH.

Because the across subframe scheduling interval k is the predefined variable value, and a value of the across subframe scheduling interval k may be dynamically indicated by the DCI carried in the ePDCCH, the terminal blindly detects the received ePDCCH in the control channel resource area in the set of ePDCCH subframes, and the ePDCCH of the terminal may be detected on the subframe n. The subframe n on which the ePDCCH is located is the MBSFN subframe, and the downlink control channel is demodulated by detecting. In the present application example, k=3, which may indicate that the subframe where the PDSCH is scheduled across subframes is n+3. The subframe n+3 is an MBSFN subframe not transmitting the PMCH. The base station transmits the narrow-band PDSCH at the subframe n+3, and the terminal obtains, by receiving the DCI, the narrow-band PDSCH received at the subframe n+3.

According to the present application example, notifying the MTC terminal with low cost of the MBSFN subframe set and the set of ePDCCH subframes, and dynamically notifying the across subframe scheduling interval through the DCI can enable the MTC terminal with low cost to effectively learn the time of transmitting the downlink traffic channel of the terminal when the across subframe scheduling interval is fixed, and ensure the consistent timing sequences of the base station side and the terminal side.

### Fifth application example

The present application example elaborates that the downlink control channel and the downlink feedback channel are transmitted by using the method provided by the disclosure; in the present application example, the downlink control channel bears the uplink scheduling grant message.

The base station may first send the MTC specific system indication message for the MTC UE, and may notify, through the system indication message, the MTC UE of the MBSFN subframe set in this cell and the subframe set actually transmitting the PMCH.

When the MTC UE transmits the downlink service information, the base station sends the uplink scheduling grant message through the ePDCCH and schedules the PUSCH of the MTC UE with low cost. The uplink scheduling grant message may be carried on the PUSCH.

Because the scheduling of the uplink traffic channel is the across subframe scheduling, and the across subframe scheduling interval k is the predefined fixed value, where k=4, the terminal blindly detects the received ePDCCH on the narrow band resource of the uplink control channel of each subframe, and the ePDCCH of the terminal may be detected on the subframe n. The subframe n on which the ePDCCH is located is the non-MBSFN subframe, the subframe where the PUSCH is scheduled across subframes is n+4. Because the subframe n+4 is the MBSFN subframe actually transmitting the PMCH, the base station postpones to the first subsequent available subframe. Because the subframe n+5 is the subframe actually transmitting the PMCH, and the subframe n+6 is the non-MBSFN subframe, the terminal postpones to the subframe n+6 to transmit the narrow-band PUSCH channel, and the base station may receive the narrow-band PUSCH in the subframe n+6.

After receiving the narrow-band PUSCH, the base station may need to feed back ACK/NACK information about whether the transmission is correct or not to the terminal, and the feedback time may be fixed at the subframe n+6+4. Because the subframe n+10 happens to be the subframe actually transmitting the PMCH, the base station postpones to the first subsequent available subframe. Because the subframe n+11 is the non-MBSFN subframe, the base station postpones to the subframe n+11 to receive the ACK/NACK information/channel fed back to the narrow-band PUSCH.

According to the present application example, notifying the MTC terminal with low cost of the subset of the MBSFN subframe set actually transmitting the PMCH can enable the MTC terminal with low cost to effectively learn the time of transmitting the uplink traffic channel and downlink feedback information/channel of the terminal when an uplink scheduling interval and an ACK/NACK interval are fixed, and ensure the consistent timing sequences of the base station side and the terminal side.

### Sixth application example

The present application example elaborates that when the message carried in the downlink traffic channel is the paging message, the downlink control channel and the downlink traffic channel are transmitted by using the method provided by the disclosure.

The base station may first send the MTC specific system indication message for the MTC UE, and may notify, through the system indication message, the MTC terminal of the MBSFN subframe set in this cell.

When the MTC UE transmits the paging message, because the same subframe of the MTC UE can only receive the resource on a narrow band and the control channel occupies the independent narrow resource, the base station schedules the paging message of the MTC UE with low cost across subframes through the ePDCCH. The paging message may be carried on the PDSCH. Both the ePDCCH and the PDSCH may use only the limited subframe sets and the limited subframe sets are the same. Optionally, the limited subframe set is {0, 4, 5, 9} in the FDD system, and the limited subframe set is {0, 1, 5, 6} in the TDD system.

The across subframe scheduling interval k is a predefined fixed value. If the value of the across subframe scheduling interval k is 1, the base station sends the PDSCH carrying the paging message on the subframe 5. The ePDCCH is in the subset of the limited subframe set. The limited subframe set is {4, 5} in the FDD system, and the limited subframe set is {0, 5} in the TDD system. The terminal blindly detects the received ePDCCH in the control channel resource area in the set {4, 9} of ePDCCH subframes, and the ePDCCH of the terminal is detected on the subframe 4. After acquiring scheduling indication message of the DCI, carried in the ePDCCH, for the paging, the terminal receives, on the subframe 5, the narrow-band PDSCH carrying the paging message.

According to the present application example, when the paging message of the MTC UE is transmitted by using the across subframe scheduling, limiting for the MTC terminal with low cost the subframe set for transmitting the paging message and the set of ePDCCH subframes when the across subframe scheduling interval is the predefined fixed value enables the MTC terminal with low cost to effectively learn the time of transmitting the paging message during the across subframe scheduling, and ensures the consistent timing sequences of the base station side and the terminal side.

### Seventh application example

The present application example elaborates that in the coverage enhancement scenario, the repetition of the downlink control channel and the downlink traffic channel may be performed by using the method provided by the disclosure.

The base station may first send the MTC specific system indication message for the MTC UE, and may notify, through the system indication message, the MTC UE of the MBSFN subframe set in this cell and the subframe set actually transmitting the PMCH.

When the MTC UE transmits the downlink service information, because the MTC UE in the coverage enhancement scenario may need to use the repetition to transmit both the downlink control channel and the downlink traffic channel, the base station schedules the PDSCH of the MTC UE with low cost across subframes through the ePDCCH. The downlink service information may be carried on the PDSCH.

When the ePDCCH is repeatedly transmitted, all non-MBSFN subframes and the set of subframes not actually transmitting the PMCH are regarded as the available subframes for performing the repetition. The N_ePDCCH repetitions do not include the PMCH subframe, the ePDCCH is repeatedly transmitted for N_ePDCCH times, and the end frame is N_ePDCCH plus N_PMCH, where N_PMCH is the number of PMCH repetitions included in the N_ePDCCH plus N_PMCH repetitions of the ePDCCH.

Because the across subframe scheduling interval k is the predefined fixed value, for example, k=1, the terminal blindly detects the received ePDCCH on the narrow band resource of the control channel of each subframe, and detects on the subframe n the last ePDCCH sent to the terminal. So, the subframe where the PDSCH is scheduled across subframes is n+1; because the subframe n+1 is the MBSFN subframe actually transmitting the PMCH, the base station postpones to the first subsequent available subframe; because the subframe n+2 is the non-MBSFN subframe, the base station postpones to the subframe n+2 to transmit the narrow-band PDSCH, and the terminal may receive the narrow-band PDSCH in the subframe n+2. At this point, the N_PDSCH repetitions do not include the PMCH subframe, the PDSCH is repeatedly transmitted for N_PDSCH times, and the end frame is N_PDSCH plus N_PMCH, where N_PMCH is the number of PMCH transmissions included in the N_PDSCH plus N_PMCH repetitions of the PDSCH.

According to the application example, when the terminal is the MTC terminal with low cost in the coverage enhancement scenario, notifying the subset of the MBSFN subframe set actually transmitting the PMCH subframe enables the MTC terminal with low-cost to effectively learn the time of transmitting the downlink control channel and the downlink traffic channel of the terminal when the across subframe scheduling interval is fixed, and ensures the consistent timing sequences of the base station side and the terminal side.

### Eighth application example

The present application example elaborates that in the coverage enhancement scenario, the repetition of the downlink control channel and the downlink traffic channel may be performed by using the method provided by the disclosure.

The base station may first send the MTC specific system indication message for the MTC UE, and may notify, through the system indication message, the MTC UE of the MBSFN subframe set in this cell and the subframe set actually transmitting the PMCH. At the same time, the downlink control channel is enabled to perform frequency hopping.

When the MTC UE transmits the downlink service information, because the MTC UE in the coverage enhancement scenario may need to use the repetition to transmit both the downlink control channel and the downlink traffic channel, the base station schedules the PDSCH of the MTC UE with low cost across subframes through the ePDCCH. The downlink service information may be carried on the PDSCH.

When the ePDCCH is repeatedly transmitted, all non-MBSFN subframes and the set of subframes not actually transmitting the PMCH are regarded as the available subframes for performing the repetition. The N_ePDCCH repetitions do not include the PMCH subframe, the ePDCCH is repeatedly transmitted for N_ePDCCH times, and the end frame is N_ePDCCH plus N_PMCH, where N_PMCH is the number of PMCH transmissions included in the N_ePDCCH plus N_PMCH repetitions of the ePDCCH. The number N_ePDCCH of repetitions of the ePDCCH is 4 times of the number Nₘᵢₙ of repetitions of the ePDCCH corresponding to the lowest coverage level, and the frequency hopping granularity is Nₘᵢₙ, so the frequency hopping may be performed for 3 times during the repetition of the ePDCCH.

At this point, because the across subframe scheduling interval k is the predefined fixed value, for example, k=1, the terminal blindly detects the received ePDCCH on the narrow band resource of the control channel of each available subframe, optionally may perform the multi-subframe channel estimation in different frequency hopping intervals, and detects on the subframe n the last ePDCCH sent to the terminal. Here, the subframe where the PDSCH is scheduled across subframes is n+1. Because the subframe n+1 is the MBSFN subframe actually transmitting the PMCH, the base station postpones to the first subsequent available subframe. Because the subframe n+2 is the non-MBSFN subframe, the base station postpones to the subframe n+2 to transmit the narrow-band PDSCH, and the terminal may receive the narrow-band PDSCH on the subframe n+2. The N_PDSCH repetitions do not include the PMCH subframe, the PDSCH is repeatedly transmitted for N_PDSCH times, and the end frame is N_PDSCH plus N_PMCH, where N_PMCH is the number of PMCH transmissions included in the N_PDSCH plus N_PMCH repetitions of the PDSCH. Besides, in the physical layer signaling scheduling the PDSCH, the PDSCH is enabled to perform the frequency hopping. The number N_PDSCH of repetitions of the PDSCH is 4 times of N_{c}, where N_{c} is a greatest common divisor of the number of repetitions corresponding to a lowest repetition level of the downlink control channel and the number of repetitions corresponding to a lowest repetition level of the downlink traffic channel, so the PDSCH is enabled to perform the frequency hopping for 5 times.

According to the application example, when the terminal is the MTC terminal with low cost in the coverage enhancement scenario, the subset of the MBSFN subframe set actually transmitting the PMCH subframe is notified and the frequency hopping is enabled. Limiting the frequency hopping time and the frequency hopping granularity enables the MTC terminal with low-cost to effectively learn the time of transmitting the downlink control channel and the downlink traffic channel of the terminal when the across subframe scheduling interval is fixed, and ensures the consistent timing sequences of the base station side and the terminal side.

The above content is a further elaboration of the disclosure, but the specific implementation of the disclosure is not limited to the elaboration.

Those ordinary skilled in the art can understand that all or a part of acts of the above embodiments may be performed by using a computer program flow; the computer program may be stored in a computer readable storage medium, and is executed on corresponding hardware platforms (such as system, installation, equipment and device). When being executed, the computer program may execute one of or a combination of the acts in the method.

Optionally, all or a part of acts of the above embodiments can also be performed by using an integrated circuit; and these acts may be respectively made into integrated circuit modules; or multiple modules or acts are made into a single integrated circuit module.

The devices/function modules/function units in the above embodiment may be realized by using a general computing device; they may be either integrated on a single computing device, or distributed on a network composed of multiple computing devices.

When the devices/function modules/function units in the above embodiment are realized in form of software function module and sold or used as an independent product, they may be stored in a computer-readable storage medium. The computer-readable storage medium may be an ROM, a magnetic disk or a compact disk.

### Industrial Applicability

The above solution prevent, in a narrow band system and a coverage enhancement system, a timing relationship of channel transmission from being affected due to the fact that the MBSFN subframe transmitting a multicast/broadcast service may occupy the entire bandwidth of the system, and guarantees the timing relationship between the base station and the terminal. By virtue of the solution, normal communication of the MTC terminal may be ensured, and the working quality of the system may be improved.

## Claims

1. A method for performing channel transmission, comprising:
determining, by a base station, a subframe set used by a downlink control channel and a subframe set used by a downlink traffic channel (300); and
performing, by the base station, across subframe scheduling for the downlink traffic channel through the downlink control channel (301);
wherein determining, by the base station, the subframe set used by the downlink control channel (300) comprises: determining, by the base station, the subframe set used by the downlink control channel according to a predefined mode or high-layer signaling; and
determining, by the base station, the subframe set used by the downlink traffic channel (300) comprises: indicating through a Machine-Type Communication, MTC, system message, or dynamically indicating through physical layer signaling, or indicating through a predefined mode, or indicating through high-layer signaling configuration, by the base station, the subframe set used by the downlink traffic channel;
wherein,
if the base station indicates the subframe set used by the downlink traffic channel through the MTC system message, the subframe set used by the downlink traffic channel comprises:
indicating through the MTC system message, by the base station, an MBSFN subframe set and a set of available unicast subframes in MBSFN subframes; or, indicating through the MTC system message, by the base station, an MBSFN subframe set, and indicating that the downlink traffic channel uses only non-MBSFN subframes;
if the base station dynamically indicates the subframe set used by the downlink traffic channel through the physical layer signaling, the subframe set used by the downlink traffic channel comprises:
dynamically indicating through the physical layer signaling, by the base station, an across subframe scheduling interval k, so as to determine one or more subframes used by the downlink traffic channel; or, indicating through the physical layer signaling, by the base station, that an subframe scheduled by across subframe scheduling is available, or indicating through the physical layer signaling a subframe that the across subframe scheduling needs to skip.

2. The method as claimed in claim 1, further comprising:
if the subframe set used by the downlink traffic channel comprises the set of the available unicast subframes in the MBSFN subframes, if an across subframe scheduling interval k is a predefined fixed value, and a subframe at n+k is a subframe for transmitting a Physical Multicast Channel, PMCH, in the MBSFN subframe set;
postponing a start subframe of subframes used by the downlink traffic channel to a first subframe available for transmitting the downlink traffic channel;
wherein n indicates time of the downlink control channel.

3. The method as claimed in claim 1, further comprising:
when the downlink control channel is repeatedly transmitted, and it is determined through the high-layer signaling that the subframe set used by the downlink control channel has an intersection with a subset of an MBSFN subframe set actually transmitting a PMCH subframe or the base station does not configure or predefine the MBSFN subframe set,
notifying, by the base station, a terminal of the subset of the MBSFN subframe set actually transmitting the PMCH subframe or a subset of a set of available MBSFN subframes;

4. The method as claimed in claim 3, further comprising:
when repetition of the downlink control channel supports frequency hopping, configuring, by the base station, that the frequency hopping of the repetition of the downlink control channel is enabled;
determining, by the base station, a manner of obtaining parameters required by the frequency hopping of the repetition of the downlink control channel.

5. The method as claimed in claim 4, wherein the manner of obtaining the parameters required by the frequency hopping can be any one of:
obtaining through a predefined fixed value;
obtaining through a predefined variable value;
obtaining through a Radio Resource Control, RRC, notification;
obtaining through a System Information Block, SIB, notification.

6. The method as claimed in claim 3, wherein when repetition of Downlink Control Information, DCI, supports frequency hopping, frequency hopping time and frequency hopping granularity of repetition are obtained in one or more of the following manners:
when the frequency hopping is performed only once, the frequency hopping time is fixed at a position N/2;
when the frequency hopping is performed once at most, the frequency hopping time is at a predefined position;
the frequency hopping for all downlink control channels with different repetition levels is performed using a frequency hopping granularity Nₘᵢₙ or Nₘᵢₙ/2;
wherein N is the number of repetitions of the DCI;
Nₘᵢₙ is the number of repetitions of the downlink control channel corresponding to a lowest repetition level.

7. The method as claimed in claim 1, wherein when the downlink traffic channel is repeatedly transmitted, subframes used for repeatedly transmitting the downlink traffic channel comprise:
only non-MBSFN subframes; or,
a subframe set which is notified by the base station and available for downlink traffic channel transmission; or,
a complementary set of a subset of an MBSFN subframe set actually transmitting the PMCH subframe, which is notified to the terminal by the base station; or,
a set composed of a subset of the set of available MBSFN subframes and a non-MBSFN subframe set.

8. The method as claimed in claim 1, further comprising:
when an end subframe of repeatedly transmitting the downlink control channel is n, and a start subframe of repeatedly transmitting the downlink traffic channel scheduled across subframes is n+k, if k is a determined fixed value and n+k is a PMCH subframe, postponing the start subframe of subframes used for repeatedly transmitting the downlink traffic channel to a first subsequent available subframe.

9. The method as claimed in claim 7, wherein when repetitions of the downlink traffic channel are performed, if the repetitions comprise N_PMCH times of transmissions of a PMCH subframe, the number of actual repetitions of the downlink traffic channel is equal to a total number of repetitions subtracted by N_PMCH.

10. A base station for performing channel transmission, comprising:
a set determining unit, which is configured to determine a subframe set used by a downlink control channel and a subframe set used by a downlink traffic channel; and
a scheduling unit, which is configured to perform across subframe scheduling for the downlink traffic channel through the downlink control channel;
wherein the set determining unit is configured to determine the subframe set used by the downlink control channel according to a predefined mode or high-layer signaling, and
wherein the set determining unit is configured to determine the subframe set used by the downlink traffic channel by indicating through a Machine-Type Communication, MTC, system message,or by dynamically indicating through physical layer signaling, or by indicating through a predefined mode, or by indicating through high-layer signaling configuration, the subframe set used by the downlink traffic channel;
wherein,
if the set determining unit is configured to determine the subframe set used by the downlink traffic channel through indication of the MTC system message, the indication of the subframe set used by the dwonlink traffic channel comprises:
indicating through the MTC system message that the subframe set used by the downlink traffic channel is: an MBSFN subframe set and a set of available unicast subframes in MBSFN subframes; or,
indicating an MBSFN subframe set through the MTC system message, and indicating that the downlink traffic channel uses only non-MBSFN subframes;
if the set determining unit is configured to determined the subframe set used by the downlink traffic channel through indication by the downlink traffic channel through the physical layer signaling, the indication of the subframe set used by the downlink traffic channel comprises:
dynamically indicating through the physical layer signaling, an across subframe scheduling interval k, so as to determine one or more subframes used by the downlink traffic channel; or,
indicating through the physical layer signaling, that a subframe scheduled by across subframe scheduling is available, or indicating through the physical layer signaling a subframe that the across subframe scheduling needs to skip.

11. The base station as claimed in claim 10, further comprising:
a postponing unit, which is configured to, when the subframe set used by the downlink traffic channel is the MBSFN subframe set and the set of available unicast subframes in the MBSFN subframes, if an across subframe scheduling interval k is a predefined fixed value, and a subframe at n+k is a subframe for transmitting a Physical Multicast Channel, PMCH, in the MBSFN subframe set, postpone a start subframe of subframes used by the downlink traffic channel to a first subframe available for transmitting the downlink traffic channel;
wherein n indicates time of the downlink control channel.

12. The base station as claimed in claim 10, further comprising:
a notifying unit, which is configured to, when the downlink control channel is repeatedly transmitted, and it is determined through the high-layer signaling that the subframe set used by the downlink control channel has an intersection with a subset of an MBSFN subframe set actually transmitting a PMCH subframe or the base station does not configure or predefine the MBSFN subframe set, notify a terminal of a subset of an MBSFN subframe set actually transmitting the PMCH subframe or a subset of a set of available MBSFN subframes;
an available subframe unit, which is configured to, when the downlink control channel repeatedly transmitted for N_ePDCCH times comprises a PMCH subframe, determine that all subframes are available for repeatedly transmitting the downlink control channel, and
when the downlink control channel repeatedly transmitted for N_ePDCCH times does not comprise the PMCH subframe, determine that all subframes not transmitting the PMCH channel are available for repeatedly transmitting the downlink control channel;
a start subframe calculating unit, which is configured to calculate a start subframe of the subframes available for repeatedly transmitting the downlink control channel after renumbering is performed according to the available subframes;
a start subframe of the subframes available for repeatedly transmitting the downlink control channel is a subset of the available subframes.
a frequency hopping unit, which is configured to, when repetition of the downlink control channel supports frequency hopping, determine that the frequency hopping of the repetition of the downlink control channel is enabled;
enabling the frequency hopping of the repetition of the downlink control channel comprises: determining a manner of obtaining parameters required by the frequency hopping of the repetition of the downlink control channel;
wherein the manner of obtaining the parameters required by the frequency hopping can be any one of:
obtaining through a predefined fixed value;
obtaining through a predefined variable value;
obtaining through a Radio Resource Control, RRC, notification;
obtaining through a System Information Block, SIB, notification.

13. The base station as claimed in claim 12, wherein the frequency hopping unit is further configured to, when repetition of Downlink Control Information, DCI, supports frequency hopping, obtain frequency hopping time and frequency hopping granularity of the repetition in one or more of the following manners:
when the frequency hopping is performed only once, the frequency hopping time is fixed at a position N/2;
when the frequency hopping is performed once at most, the frequency hopping time is at a predefined position;
the frequency hopping for all downlink control channels with different repetition levels is performed using a frequency hopping granularity Nₘᵢₙ or Nₘᵢₙ/2;
wherein N is the number of repetitions of the DCI;
Nₘᵢₙ is the number of repetitions of the downlink control channel corresponding to a lowest repetition level;
the base station further comprises:
a postponing unit, which is configured to, when an end subframe of repeatedly transmitting the downlink control channel is n, and a start subframe of repeatedly transmitting the downlink traffic channel scheduled across subframes is n+k, if k is a determined fixed value and n+k is a PMCH subframe, postpone a start subframe of subframes used for repeatedly transmitting the downlink traffic channel to a first subsequent available subframe.

14. A terminal for performing channel transmission, comprising a receiving unit, which is configured to receive a downlink traffic channel based on that a base station performs across subframe scheduling for the downlink traffic channel through a downlink control channel;
further comprising:
a receiving postponing unit, which is configured to, when a subframe set used by the downlink traffic channel which is scheduled across subframes by the base station is a set comprising available unicast subframes in Multicast Broadcast Single Frequency Network, MBSFN, subframes, if an across subframe scheduling interval k is a predefined fixed value, and a subframe at n+k is a subframe for transmitting a Physical Multicast Channel, PMCH, in the MBSFN subframe set, postpone receiving a start subframe of subframes used by the downlink traffic channel to a first subframe available for receiving; wherein n indicates time of the downlink control channel;
further comprising:
the receiving postponing unit, which is configured to, when an end subframe of repeatedly transmitting the downlink control channel is n, and a start subframe of repeatedly transmitting the downlink traffic channel scheduled across subframes is n+k, wherein k is a determined fixed value and n+k is a PMCH subframe, postpone receiving a start subframe of subframes used for repeatedly transmitting the downlink traffic channel to a first subsequent available subframe.

## Patentansprüche

1. Verfahren zum Durchführen von Kanalübertragung, umfassend:
Bestimmen, durch eine Basisstation, eines Subframe-Satzes, der durch einen Downlink-Steuerkanal verwendet wird, und eines Subframe-Satzes, der durch einen Downlink-Verkehrskanal verwendet wird (300); und
Durchführen, durch die Basisstation, von Subframe-übergreifender Zeitplanung für den Downlink-Verkehrskanal durch den Downlink-Steuerkanal (301);
wobei Bestimmen, durch die Basisstation, des Subframe-Satzes, der durch den Downlink-Steuerkanal verwendet wird, (300) Folgendes umfasst: Bestimmen, durch die Basisstation, des Subframe-Satzes, der durch den Downlink-Steuerkanal verwendet wird, gemäß einem vordefinierten Modus oder einer Signalisierung einer höheren Schicht; und
Bestimmen, durch die Basisstation, des Subframe-Satzes, der durch den Downlink-Verkehrskanal verwendet wird, (300) Folgendes umfasst: Angeben, über eine Maschinenkommunikation-Systemnachricht bzw. MTC-Systemnachricht, oder dynamisches Angeben über Bitübertragungsschicht-Signalisierung oder Angeben über einen vordefinierten Modus oder Angeben über eine Konfiguration einer Signalisierung einer höheren Schicht, durch die Basisstation, des durch den Downlink-Verkehrskanal verwendeten Subframe-Satzes; wobei,
wenn die Basisstation den durch den Downlink-Verkehrskanal verwendeten Subframe-Satz über die MTC-Systemnachricht angibt, umfasst der durch den Downlink-Verkehrskanal verwendete Subframe-Satz:
Angeben über die MTC-Systemnachricht, durch die Basisstation, eines MBSFN-Subframe-Satzes und eines Satzes von verfügbaren Unicast-Subframes in MBSFN-Subframes; oder Angeben über die MTC-Systemnachricht, durch die Basisstation, eines MBSFN-Subframe-Satzes und Angeben, dass der Downlink-Verkehrskanal nur Nicht-MBSFN-Subframes verwendet;
wenn die Basisstation den durch den Downlink-Verkehrskanal verwendeten Subframe-Satz über die Signalisierung einer Bitübertragungsschicht dynamisch angibt, umfasst der durch den Downlink-Verkehrskanal verwendete Subframe-Satz Folgendes:
dynamisches Angeben über die Signalisierung der Bitübertragungsschicht, durch die Basisstation, eines Subframe-übergreifende-Zeitplanung-Intervalls k, um somit einen oder mehrere durch den Downlink-Verkehrskanal verwendete Subframes zu bestimmen; oder Angeben durch die Bitübertragungsschicht-Signalisierung, durch die Basisstation, dass ein durch die Subframe-übergreifende Zeitplanung geplanter Subframe verfügbar ist, oder Angeben über die Bitübertragungsschicht-Signalisierung eines Subframes, den die Subframe-übergreifende Zeitplanung überspringen muss.

2. Verfahren nach Anspruch 1, ferner umfassend:
falls der durch den Downlink-Verkehrskanal verwendete Subframe-Satz den Satz der verfügbaren Unicast-Subframes in den MBSFN-Subframes umfasst, falls ein Subframe-übergreifende-Zeitplanung-Intervall k ein vordefinierter fester Wert ist, und ein Subframe bei n+k ein Subframe zum Übertragen eines physischen Multicast-Kanals, PMCH, in dem MBSFN-Subframe-Satz ist;
Verschieben eines Start-Subframes von Subframes, die durch den Downlink-Verkehrskanal verwendet werden, zu einem ersten Subframe, der zum Übertragen des Downlink-Verkehrskanals verfügbar ist;
wobei n die Zeit des Downlink-Steuerkanals angibt.

3. Verfahren nach Anspruch 1, ferner umfassend:
wenn der Downlink-Steuerkanal wiederholt übertragen wird und es über die Signalisierung einer höheren Schicht bestimmt wird, dass der durch den Downlink-Steuerkanal verwendete Subframe-Satz einen Schnitt mit einem Teilsatz eines MBSFN-Subframe-Satzes, der tatsächlich einen PMCH-Subframe überträgt, aufweist, oder die Basisstation den MBSFN-Subframe-Satz nicht konfiguriert oder vordefiniert,
Benachrichtigen, durch die Basisstation, eines Endgeräts über den Teilsatz des MBSFN-Subframe-Satzes, der tatsächlich den PMCH-Subframe überträgt, oder einen Teilsatz eines Satzes von verfügbaren MBSFN-Subframes.

4. Verfahren nach Anspruch 3, ferner umfassend:
wenn Wiederholung des Downlink-Steuerkanals Frequenzspringen unterstützt, Konfigurieren, durch die Basisstation, dass das Frequenzspringen der Wiederholung des Downlink-Steuerkanals freigeschaltet wird;
Bestimmen, durch die Basisstation, einer Weise zum Erhalten von Parametern, die durch das Frequenzspringen der Wiederholung des Downlink-Steuerkanals benötigt werden.

5. Verfahren nach Anspruch 4, wobei die Weise des Erhaltens der Parameter, die durch das Frequenzspringen benötigt werden, eine der folgenden sein kann:
Erhalten über einen vordefinierten festen Wert;
Erhalten über einen vordefinierten variablen Wert;
Erhalten über eine Funkressourcensteuerung-Benachrichtigung bzw. RRC-Benachrichtigung;
Erhalten über eine Systeminformationenblock-Benachrichtigung bzw. SIB-Benachrichtigung.

6. Verfahren nach Anspruch 3, wobei, wenn Wiederholung von Downlink-Steuerinformationen, DCI, Frequenzspringen unterstützt, Frequenzspringen-Zeit und Frequenzspringen-Granularität von Wiederholung auf eine oder mehrere der folgenden Weisen erhalten werden:
wenn das Frequenzspringen nur einmal durchgeführt wird, ist die Frequenzspringen-Zeit an einer Position N/2 fixiert;
wenn das Frequenzspringen höchstens einmal durchgeführt wird, befindet sich die Frequenzspringen-Zeit an einer vordefinierten Position;
das Frequenzspringen für alle Downlink-Steuerkanäle mit unterschiedlichen Wiederholungsniveaus wird unter Verwendung einer Frequenzspringen-Granularität von Nₘᵢₙ oder Nₘᵢₙ/2 durchgeführt;
wobei N die Anzahl von Wiederholungen der DCI ist;
Nₘᵢₙ die Anzahl von Wiederholungen des Downlink-Steuerkanals ist, die einem niedrigsten Wiederholungsniveau entspricht.

7. Verfahren nach Anspruch 1, wobei, wenn der Downlink-Verkehrskanal wiederholt übertragen wird, zum wiederholten Übertragen des Downlink-Verkehrskanals verwendete Subframes Folgendes umfassen:
nur Nicht-MBSFN-Subframes; oder
einen Subframe-Satz, der durch die Basisstation gemeldet wurde und für Downlink-Verkehrskanal-Übertragung verfügbar ist; oder,
einen komplementären Satz eines Teilsatzes eines MBSFN-Subframe-Satzes, der tatsächlich den PMCH-Subframe überträgt, der durch die Basisstation an das Endgerät gemeldet wurde; oder
einen Satz, der aus einem Teilsatz des Satzes von verfügbaren MBSFN-Subframes und einem Nicht-MBSFN-Subframe-Satz zusammengesetzt ist.

8. Verfahren nach Anspruch 1, ferner umfassend:
wenn ein End-Subframe von wiederholtem Übertragen des Downlink-Steuerkanals n ist und ein Start-Subframe von wiederholtem Übertragen des Downlink-Verkehrskanals, Subframe-übergreifend eingeplant, n+k ist, falls k ein bestimmter fester Wert ist und n+k ein PMCH-Subframe ist, Verschieben des Start-Subframes von Subframes, die zum wiederholten Übertragen des Downlink-Verkehrskanal verwendet werden, zu einem ersten nachfolgenden verfügbaren Subframe.

9. Verfahren nach Anspruch 7, wobei, wenn Wiederholungen des Downlink-Verkehrskanals durchgeführt werden, falls die Wiederholungen N PMCH Male von Übertragungen eines PMCH-Subframes umfassen, die Anzahl von tatsächlichen Wiederholungen des Downlink-Verkehrskanals gleich einer Gesamtanzahl von Wiederholungen minus N_PMCH ist.

10. Basisstation zum Durchführen von Kanalübertragung, umfassend:
eine Satzbestimmungseinheit, die ausgelegt ist zum Bestimmen eines Subframe-Satzes, der durch einen Downlink-Steuerkanal verwendet wird, und eines Subframe-Satzes, der durch einen Downlink-Verkehrskanal verwendet wird; und
eine Zeitplanungseinheit, die ausgelegt ist zum Durchführen von Subframe-übergreifender Zeitplanung für den Downlink-Verkehrskanal durch den Downlink-Steuerkanal;
wobei die Satzbestimmungseinheit ausgelegt ist zum Bestimmen des Subframe-Satzes, der durch den Downlink-Steuerkanal verwendet wird, gemäß einem vordefinierten Modus oder einer Signalisierung einer höheren Schicht; und
wobei die Satzbestimmungseinheit ausgelegt ist zum Bestimmen des Subframe-Satzes, der durch den Downlink-Verkehrskanal verwendet wird, durch Angeben, über eine Maschinenkommunikation-Systemnachricht bzw. MTC-Systemnachricht, oder dynamisches Angeben über Bitübertragungsschicht-Signalisierung oder Angeben über einen vordefinierten Modus oder durch Angeben über eine Konfiguration einer Signalisierung einer höheren Schicht des durch den Downlink-Verkehrskanal verwendeten Subframe-Satzes;
wobei,
falls die Satzbestimmungseinheit konfiguriert ist zum Bestimmen des Subframe-Satzes, der durch den Downlink-Verkehrskanal verwendet wird, über Angabe der MTC-Systemnachricht, umfasst die Angabe des durch den Downlink-Verkehrskanal verwendeten Subframe-Satzes:
Angeben über die MTC-Systemnachricht, dass der durch den Downlink-Verkehrskanal verwendete Subframe-Satz Folgendes ist: ein MBSFN-Subframe-Satz und ein Satz von verfügbaren Unicast-Subframes in MBSFN-Subframes; oder
Angeben über die MTC-Systemnachricht eines MBSFN-Subframe-Satzes und Angeben, dass der Downlink-Verkehrskanal nur Nicht-MBSFN-Subframe-Sätze verwendet;
falls die Satzbestimmungseinheit konfiguriert ist zum Bestimmen des durch den Downlink-Verkehrskanal verwendeten Subframe-Satzes über Angabe durch den Downlink-Verkehrskanal über die Bitübertragungsschicht-Signalisierung, umfasst die Angabe des durch den Downlink-Verkehrskanal verwendeten Subframe-Satzes Folgendes:
dynamisches Angeben über die Bitübertragungsschicht-Signalisierung eines Subframe-übergreifende-Zeitplanung-Intervalls k, um somit einen oder mehrere durch den Downlink-Verkehrskanal verwendete Subframes zu bestimmen; oder
Angeben durch die Bitübertragungsschicht-Signalisierung, dass ein durch Subframe-übergreifende Zeitplanung geplanter Subframe verfügbar ist, oder Angeben über die Bitübertragungsschicht-Signalisierung eines Subframes, den die Subframe-übergreifende Zeitplanung überspringen muss.

11. Basisstation nach Anspruch 10, ferner umfassend:
eine Verschiebungseinheit, die ausgelegt ist zum, wenn der durch den Downlink-Verkehrskanal verwendete Subframe-Satz der MBSFN-Subframe-Satz und der Satz von verfügbaren Unicast-Subframes in den MBSFN-Subframes ist, falls ein Subframe-übergreifende-Zeitplanung-Intervall k ein vordefinierter fester Wert ist, und ein Subframe bei n+k ein Subframe zum Übertragen eines physischen Multicast-Kanals, PMCH, in dem MBSFN-Subframe-Satz ist, Verschieben eines Start-Subframes von Subframes, die durch den Downlink-Verkehrskanal verwendet werden, zu einem ersten Subframe, der zum Übertragen des Downlink-Verkehrskanals verfügbar ist;
wobei n die Zeit des Downlink-Steuerkanals angibt.

12. Basisstation nach Anspruch 10, ferner umfassend:
eine Benachrichtigungseinheit, die ausgelegt ist zum, wenn der Downlink-Steuerkanal wiederholt übertragen wird und es über die Signalisierung einer höheren Schicht bestimmt wird, dass der durch den Downlink-Steuerkanal verwendete Subframe-Satz einen Schnitt mit einem Teilsatz eines MBSFN-Subframe-Satzes, der tatsächlich einen PMCH-Subframe überträgt, aufweist, oder die Basisstation den MBSFN-Subframe-Satz nicht konfiguriert oder vordefiniert, Benachrichtigen eines Endgeräts über einen Teilsatz eines MBSFN-Subframe-Satzes, der tatsächlich den PMCH-Subframe überträgt, oder einen Teilsatz eines Satzes von verfügbaren MBSFN-Subframes;
eine Verfügbare-Subframes-Einheit, die ausgelegt ist zum, wenn der N_ePDCCH-mal wiederholt übertragene Downlink-Steuerkanal einen PMCH-Subframe umfasst, Bestimmen, dass alle Subframes für wiederholtes Übertragen des Downlink-Steuerkanals verfügbar sind, und
wenn der N_ePDCCH-mal wiederholt übertragene Downlink-Steuerkanal den PMCH-Subframe nicht umfasst, Bestimmen, dass alle Subframes, die den PMCH-Kanal nicht übertragen, für wiederholtes Übertragen des Downlink-Steuerkanals verfügbar sind;
eine Start-Subframe-Berechnungseinheit, die ausgelegt ist zum Berechnen eines Start-Subframes der Subframes, die für wiederholtes Übertragen des Downlink-Steuerkanals verfügbar sind, nachdem Umnummerierung gemäß den verfügbaren Subframes durchgeführt wurde;
wobei ein Start-Subframe der Subframes, die für wiederholtes Übertragen des Downlink-Steuerkanals verfügbar sind, ein Teilsatz der verfügbaren Subframes ist;
eine Frequenzsprungeinheit, die ausgelegt ist zum, wenn Wiederholung des Downlink-Steuerkanals Frequenzspringen unterstützt, Bestimmen, dass das Frequenzspringen der Wiederholung des Downlink-Steuerkanals freigeschaltet ist;
wobei Freischalten des Frequenzspringens der Wiederholung des Downlink-Steuerkanals umfasst:
Bestimmen einer Weise zum Erhalten von Parametern, die durch das Frequenzspringen der Wiederholung des Downlink-Steuerkanals benötigt werden;
wobei die Weise des Erhaltens der Parameter, die durch das Frequenzspringen benötigt werden, eine der folgenden sein kann:
Erhalten über einen vordefinierten festen Wert;
Erhalten über einen vordefinierten variablen Wert;
Erhalten über eine Funkressourcensteuerung-Benachrichtigung bzw. RRC-Benachrichtigung;
Erhalten über eine Systeminformationenblock-Benachrichtigung bzw. SIB-Benachrichtigung.

13. Basisstation nach Anspruch 12, wobei die Frequenzsprungeinheit ferner ausgelegt ist zum, wenn Wiederholung von Downlink-Steuerinformationen, DCI, Frequenzspringen unterstützt, Erhalten einer Frequenzspringen-Zeit und einer Frequenzspringen-Granularität der Wiederholung auf eine oder mehrere der folgenden Weisen:
wenn das Frequenzspringen nur einmal durchgeführt wird, ist die Frequenzspringen-Zeit an einer Position N/2 fixiert;
wenn das Frequenzspringen höchstens einmal durchgeführt wird, befindet sich die Frequenzspringen-Zeit an einer vordefinierten Position;
das Frequenzspringen für alle Downlink-Steuerkanäle mit unterschiedlichen Wiederholungsniveaus wird unter Verwendung einer Frequenzspringen-Granularität von N_{min.} oder Nₘᵢₙ/2 durchgeführt;
wobei N die Anzahl von Wiederholungen der DCI ist;
N_{min.} die Anzahl von Wiederholungen des Downlink-Steuerkanals ist, die einem niedrigsten Wiederholungsniveau entspricht;
wobei die Basisstation ferner Folgendes umfasst:
eine Verschiebungseinheit, die ausgelegt ist zum, wenn ein End-Subframe von wiederholtem Übertragen des Downlink-Steuerkanals n ist und ein Start-Subframe von wiederholtem Übertragen des Downlink-Steuerkanals, der Subframe-übergreifend geplant ist, n+k ist, falls k ein bestimmter fester Wert ist und n+k ein PMCH-Subframe ist, Verschieben eines Start-Subframes von Subframes, die zum wiederholten Übertragen des Downlink-Steuerkanals verwendet werden, zu einem ersten nachfolgenden verfügbaren Subframe.

14. Endgerät zum Durchführen von Kanalübertragung, das eine Empfangseinheit umfasst, die ausgelegt ist zum Empfangen eines Downlink-Verkehrskanals auf der Grundlage davon, dass eine Basisstation Subframe-übergreifende Zeitplanung für den Downlink-Verkehrskanal über einen Downlink-Steuerkanal durchführt;
ferner umfassend:
eine Empfang-Verschiebungseinheit, die ausgelegt ist zum, wenn ein Subframe-Satz, der durch den Downlink-Verkehrskanal, der durch die Basisstation Subframe-übergreifend geplant ist, verwendet wird, ein Satz ist, der verfügbare Unicast-Subframes in Multicast Broadcast Single Frequency Network-Subframes bzw. MBSFN-Subframes umfasst, falls ein Subframe-übergreifende-Zeitplanung-Intervall k ein vordefinierter fester Wert ist und ein Subframe bei n+k ein Subframe für Übertragen eines physischen Multicast-Kanals, PMCH, in dem MBSFN-Subframe-Satz ist, Verschieben von Empfang eines Start-Subframes von Subframes, der durch den Downlink-Verkehrskanal verwendet wird, zu einem ersten für Empfang verfügbaren Subframe; wobei n eine Zeit für den Downlink-Steuerkanal angibt;
ferner umfassend:
die Empfang-Verschiebungseinheit, die ausgelegt ist zum, wenn ein End-Subframe von wiederholtem Übertragen des Downlink-Steuerkanals n ist und ein Start-Subframe von wiederholtem Übertragen des Downlink-Steuerkanals, der Subframe-übergreifend geplant ist, n+k ist, wobei k ein bestimmter fester Wert ist und n+k ein PMCH-Subframe ist, Verschieben von Empfang eines Start-Subframes von Subframes, die zum wiederholten Übertragen des Downlink-Verkehrskanals verwendet werden, zu einem ersten nachfolgenden verfügbaren Subframe.

## Revendications

1. Procédé de réalisation d'une transmission de canal, comprenant :
la détermination, par une station de base, d'un ensemble de sous-trames utilisé par un canal de commande descendant et d'un ensemble de sous-trames utilisé par un canal de trafic descendant (300) ; et
la réalisation, par la station de base, d'un ordonnancement sur des sous-trames pour le canal de trafic descendant à travers le canal de commande descendant (301) ;
la détermination, par la station de base, de l'ensemble de sous-trames utilisé par le canal de commande descendant (300) comprenant : la détermination, par la station de base, de l'ensemble de sous-trames utilisé par le canal de commande descendant selon un mode prédéfini ou une signalisation sur les couches supérieures ; et
la détermination, par la station de base, de l'ensemble de sous-trames utilisé par le canal de trafic descendant (300) comprenant : l'indication, au moyen d'un message de système de communication de type machine, MTC, ou l'indication dynamique, au moyen d'une signalisation sur la couche physique, ou l'indication, au moyen d'un mode prédéfini, ou l'indication, au moyen d'une configuration de signalisation sur les couches supérieures, par la station de base, de l'ensemble de sous-trames utilisé par le canal de trafic descendant ;
si la station de base indique l'ensemble de sous-trames utilisé par le canal de trafic descendant au moyen du message de système MTC, l'ensemble de sous-trames utilisé par le canal de trafic descendant comprenant :
l'indication, au moyen du message de système MTC, par la station de base, d'un ensemble de sous-trames MBSFN et d'un ensemble de sous-trames unicast disponibles dans des sous-trames MBSFN ; ou l'indication, au moyen du message de système MTC, par la station de base, d'un ensemble de sous-trames MBSFN et l'indication que le canal de trafic descendant utilise uniquement des sous-trames non-MBSFN ;
si la station de base indique dynamiquement l'ensemble de sous-trames utilisé par le canal de trafic descendant au moyen de la signalisation sur la couche physique, l'ensemble de sous-trames utilisé par le canal de trafic descendant comprenant :
l'indication dynamique, au moyen de la signalisation sur la couche physique, par la station de base, d'un intervalle d'ordonnancement sur des sous-trames k, de manière à déterminer une ou plusieurs sous-trames utilisées par le canal de trafic descendant ; ou
l'indication, au moyen de la signalisation sur la couche physique, par la station de base, qu'une sous-trame ordonnancée par ordonnancement sur des sous-trames est disponible, ou l'indication, au moyen de la signalisation sur la couche physique, d'une sous-trame que l'ordonnancement sur des sous-trames doit sauter.

2. Procédé selon la revendication 1, comprenant en outre :
si l'ensemble de sous-trames utilisé par le canal de trafic descendant comprend l'ensemble des sous-trames unicast disponibles dans les sous-trames MBSFN, si un intervalle d'ordonnancement sur des sous-trames k est une valeur fixe prédéfinie et une sous-trame à n+k est une sous-trame pour la transmission d'un canal physique multicast, PMCH, dans l'ensemble de sous-trames MBSFN, le report d'une sous-trame de début de sous-trames utilisées par le canal de trafic descendant jusqu'à une première sous-trame disponible pour la transmission du canal de trafic descendant ;
n indiquant l'occasion du canal de commande descendant.

3. Procédé selon la revendication 1, comprenant en outre :
lors d'une transmission répétée du canal de commande descendant et lorsqu'il est déterminé, au moyen de la signalisation sur les couches supérieures, que l'ensemble de sous-trames utilisé par le canal de commande descendant est en intersection avec un sous-ensemble d'un ensemble de sous-trames PMCH transmettant effectivement une sous-trame MBSFN ou la station de base ne configure ou ne prédéfinit pas l'ensemble de sous-trames MBSFN,
la notification, par la station de base, à un terminal, du sous-ensemble de l'ensemble de sous-trames MBSFN transmettant effectivement la sous-trame PMCH ou d'un sous-ensemble d'un ensemble de sous-trames MBSFN disponibles.

4. Procédé selon la revendication 3, comprenant en outre :
lorsqu'une répétition du canal de commande descendant admet un saut de fréquence, la configuration, par la station de base, que le saut de fréquence de la répétition du canal de commande descendant est activé ;
la détermination, par la station de base, d'un mode d'obtention de paramètres nécessaires au saut de fréquence de la répétition du canal de commande descendant.

5. Procédé selon la revendication 4, dans lequel le mode d'obtention des paramètres nécessaires au saut de fréquence peut être au choix :
l'obtention au moyen d'une valeur fixe prédéfinie ;
l'obtention au moyen d'une valeur variable prédéfinie ;
l'obtention au moyen d'une notification de type commande des ressources radio, RRC ;
l'obtention au moyen d'une notification de type bloc d'informations système, SIB.

6. Procédé selon la revendication 3, dans lequel, lorsqu'une répétition d'informations de commande sur la liaison descendante, DCI, admet un saut de fréquence, l'occasion du saut de fréquence et la granularité du saut de fréquence de la répétition sont obtenues selon une ou plusieurs des manières suivantes :
lorsque le saut de fréquence n'est réalisé qu'une seule fois, l'occasion du saut de fréquence est fixée à une position N/2 ;
lorsque le saut de fréquence est réalisé tout au plus une fois, l'occasion du saut de fréquence occupe une position prédéfinie ;
le saut de fréquence pour tous les canaux de commande descendants avec des niveaux de répétition différents est réalisé à l'aide d'une granularité du saut de fréquence Nₘᵢₙ ou Nₘᵢₙ/2 ;
N étant le nombre de répétitions des DCI ;
Nₘᵢₙ étant le nombre de répétitions du canal de commande descendant correspondant au plus bas niveau de répétition.

7. Procédé selon la revendication 1, dans lequel, lors d'une transmission répétée du canal de trafic descendant, les sous-trames utilisées pour la transmission répétée du canal de trafic descendant comprennent :
uniquement des sous-trames non-MBSFN ; ou
un ensemble de sous-trames notifié par la station de base et disponible pour la transmission du canal de trafic descendant ; ou
un ensemble complémentaire d'un sous-ensemble d'un ensemble de sous-trames MBSFN transmettant effectivement la sous-trame PMCH, notifié au terminal par la station de base ; ou
un ensemble composé d'un sous-ensemble de l'ensemble de sous-trames MBSFN disponibles et d'un ensemble de sous-trames non-MBSFN.

8. Procédé selon la revendication 1, comprenant en outre :
lorsqu'une sous-trame de fin d'une transmission répétée du canal de commande descendant est n et une sous-trame de début d'une transmission répétée du canal de trafic descendant ordonnancé sur des sous-trames est n+k, si k est une valeur fixe déterminée et n+k est une sous-trame PMCH, le report de la sous-trame de départ de sous-trames utilisées pour la transmission répétée du canal de trafic descendant jusqu'à une première sous-trame suivante disponible.

9. Procédé selon la revendication 7, dans lequel, lorsque des répétitions du canal de de trafic descendant sont réalisées, si les répétitions comprennent N_PMCH occasions de transmissions d'une sous-trame PMCH, le nombre de répétitions effectives du canal de trafic descendant est égal à un nombre total de répétitions soustrait de N_PMCH.

10. Station de base pour réaliser une transmission de canal, comprenant :
une unité de détermination d'ensemble, configurée pour déterminer un ensemble de sous-trames utilisé par un canal de commande descendant et un ensemble de sous-trames utilisé par un canal de trafic descendant ; et
une unité d'ordonnancement, configurée pour réaliser un ordonnancement sur des sous-trames pour le canal de trafic descendant à travers le canal de commande descendant ;
l'unité de détermination d'ensemble étant configurée pour déterminer l'ensemble de sous-trames utilisé par le canal de commande descendant selon un mode prédéfini ou une signalisation sur les couches supérieures, et
l'unité de détermination d'ensemble étant configurée pour déterminer l'ensemble de sous-trames utilisé par le canal de trafic descendant par indication, au moyen d'un message de système de communication de type machine, MTC, ou par indication dynamique, au moyen d'une signalisation sur la couche physique, ou par indication, au moyen d'un mode prédéfini, ou par indication, au moyen d'une configuration de signalisation sur les couches supérieures, de l'ensemble de sous-trames utilisé par le canal de trafic descendant ;
si l'unité de détermination d'ensemble est configurée pour déterminer l'ensemble de sous-trames utilisé par le canal de trafic descendant au moyen d'une indication du message de système MTC, l'indication de l'ensemble de sous-trames utilisé par le canal de trafic descendant comprenant :
l'indication, au moyen du message de système MTC, que l'ensemble de sous-trames utilisé par le canal de trafic descendant est : un ensemble de sous-trames MBSFN et un ensemble de sous-trames unicast disponibles dans des sous-trames MBSFN ; ou
l'indication d'un ensemble de sous-trames MBSFN, au moyen du message de système MTC, et l'indication que le canal de trafic descendant utilise uniquement des sous-trames non-MBSFN ;
si l'unité de détermination d'ensemble est configurée pour déterminer l'ensemble de sous-trames utilisé par le canal de trafic descendant au moyen d'une indication par le canal de trafic descendant au moyen de la signalisation sur la couche physique, l'indication de l'ensemble de sous-trames utilisé par le canal de trafic descendant comprenant :
l'indication dynamique, au moyen de la signalisation sur la couche physique, d'un intervalle d'ordonnancement sur des sous-trames k, de manière à déterminer une ou plusieurs sous-trames utilisées par le canal de trafic descendant ; ou
l'indication, au moyen de la signalisation sur la couche physique, qu'une sous-trame ordonnancée par ordonnancement sur des sous-trames est disponible, ou l'indication, au moyen de la signalisation sur la couche physique, d'une sous-trame que l'ordonnancement sur des sous-trames doit sauter.

11. Station de base selon la revendication 10, comprenant en outre :
une unité de report, configurée pour, lorsque l'ensemble de sous-trames utilisé par le canal de trafic descendant est l'ensemble de sous-trames MBSFN et l'ensemble des sous-trames unicast disponibles dans les sous-trames MBSFN, si un intervalle d'ordonnancement sur des sous-trames k est une valeur fixe prédéfinie et une sous-trame à n+k est une sous-trame pour la transmission d'un canal physique multicast, PMCH, dans l'ensemble de sous-trames MBSFN, reporter une sous-trame de début de sous-trames utilisées par le canal de trafic descendant jusqu'à une première sous-trame disponible pour la transmission du canal de trafic descendant ;
n indiquant l'occasion du canal de commande descendant.

12. Station de base selon la revendication 10, comprenant en outre :
une unité de notification, configurée pour, lors d'une transmission répétée du canal de commande descendant et lorsqu'il est déterminé, au moyen de la signalisation sur les couches supérieures, que l'ensemble de sous-trames utilisé par le canal de commande descendant est en intersection avec un sous-ensemble d'un ensemble de sous-trames MBSFN transmettant effectivement une sous-trame PMCH ou la station de base ne configure ou ne prédéfinit pas l'ensemble de sous-trames MBSFN, notifier à un terminal un sous-ensemble d'un ensemble de sous-trames MBSFN transmettant effectivement la sous-trame PMCH ou un sous-ensemble d'un ensemble de sous-trames MBSFN disponibles ;
une unité de sous-trames disponibles, configurée pour, lorsque le canal de commande descendant transmis de façon répétée à N_ePDCCH occasions comprend une sous-trame PMCH, déterminer que toutes les sous-trames sont disponibles pour la transmission répétée du canal de commande descendant, et
lorsque le canal de commande descendant transmis de façon répétée à N_ePDCCH occasions ne comprend pas la sous-trame PMCH, déterminer que toutes les sous-trames ne transmettant pas le canal PMCH sont disponibles pour la transmission répétée du canal de commande descendant ;
une unité de calcul de sous-trame de début, configurée pour calculer une sous-trame de début des sous-trames disponibles pour la transmission répétée du canal de commande descendant après la réalisation d'une renumérotation selon les sous-trames disponibles ;
une sous-trame de début des sous-trames disponibles pour la transmission répétée du canal de commande descendant étant un sous-ensemble des sous-trames disponibles ;
une unité de saut de fréquence, configurée pour, lorsqu'une répétition du canal de commande descendant admet un saut de fréquence, déterminer que le saut de fréquence de la répétition du canal de commande descendant est activée ;
l'activation du saut de fréquence de la répétition du canal de commande descendant comprenant : la détermination d'un mode d'obtention de paramètres nécessaires au saut de fréquence de la répétition du canal de commande descendant ;
le mode d'obtention des paramètres nécessaires au saut de fréquence pouvant être au choix :
l'obtention au moyen d'une valeur fixe prédéfinie ;
l'obtention au moyen d'une valeur variable prédéfinie ;
l'obtention au moyen d'une notification de type commande des ressources radio, RRC ;
l'obtention au moyen d'une notification de type bloc d'informations système, SIB.

13. Station de base selon la revendication 12, dans laquelle l'unité de saut de fréquence est configurée en outre pour, lorsqu'une répétition d'informations de commande sur la liaison descendante, DCI, admet un saut de fréquence, obtenir une occasion du saut de fréquence et une granularité du saut de fréquence de la répétition selon une ou plusieurs des manières suivantes :
lorsque le saut de fréquence n'est réalisé qu'une seule fois, l'occasion du saut de fréquence est fixée à une position N/2 ;
lorsque le saut de fréquence est réalisé tout au plus une fois, l'occasion du saut de fréquence occupe une position prédéfinie ;
le saut de fréquence pour tous les canaux de commande descendants avec des niveaux de répétition différents est réalisé à l'aide d'une granularité du saut de fréquence Nₘᵢₙ ou Nₘᵢₙ/2 ;
N étant le nombre de répétitions des DCI ;
Nₘᵢₙ étant le nombre de répétitions du canal de commande descendant correspondant au plus bas niveau de répétition ;
la station de base comprenant en outre :
une unité de report, configurée pour, lorsqu'une sous-trame de fin de la transmission répétée du canal de commande descendant est n et une sous-trame de début de la transmission répétée du canal de trafic descendant ordonnancé sur des sous-trames est n+k, si k est une valeur fixe déterminée et n+k est une sous-trame PMCH, reporter une sous-trame de début de sous-trames utilisées pour la transmission répétée du canal de trafic descendant jusqu'à une première sous-trame suivante disponible.

14. Terminal pour réaliser une transmission de canal, comprenant une unité de réception, configurée pour recevoir un canal de trafic descendant dans le cas où une station de base réalise un ordonnancement sur des sous-trames pour le canal de trafic descendant à travers un canal de commande descendant ;
comprenant en outre :
une unité de report de réception, configurée pour, lorsqu'un ensemble de sous-trames utilisé par le canal de trafic descendant ordonnancé sur des sous-trames par la station de base est un ensemble comprenant des sous-trames unicast disponibles dans des sous-trames de réseau monofréquence en diffusion et multicast, MBSFN, si un intervalle d'ordonnancement sur des sous-trames k est une valeur fixe prédéfinie et une sous-trame à n+k est une sous-trame pour la transmission d'un canal physique multicast, PMCH, dans l'ensemble de sous-trames MBSFN, reporter la réception d'une sous-trame de début des sous-trames utilisées par le canal de trafic descendant jusqu'à une première sous-trame disponible pour la réception ; n indiquant une occasion du canal de commande descendant ;
comprenant en outre :
l'unité de report de réception, configurée pour, lorsqu'une sous-trame de fin de la transmission répétée du canal de commande descendant est n et une sous-trame de début de la transmission répétée du canal de trafic descendant ordonnancé sur des sous-trames est n+k, k étant une valeur fixe déterminée et n+k étant une sous-trame PMCH, reporter la réception d'une sous-trame de début de sous-trames utilisées pour la transmission répétée du canal de trafic descendant jusqu'à une première sous-trame suivante disponible.
